# EUROPEAN PATENT APPLICATION

(11) **EP 4 357 130 A1**
(43) Date of publication of application: **24.04.2024**
(21) Application number: 22825063.5
(22) Date of filing: 16.06.2022
(51) Int. Cl.: B32B 27/00, B32B 27/30, C03C 27/12, C08F 16/38, C09J 129/14, C09J 7/38, G02F 1/1333

(54) **ADHESIVE FILM, LAMINATE, LIQUID CRYSTAL DISPLAY, AND LAMINATED GLASS**

(30) Priority: 18.06.2021 JP 2021102043; 09.11.2021 JP 2021182887
(71) Applicant: SEKISUI CHEMICAL CO., LTD., Osaka-shi Osaka 530-8565 (JP)
(72) Inventor: OOHIGASHI, Yuji, Koka-shi, Shiga 528-8585 (JP); ISHIKAWA, Yuki, Mishima-gun, Osaka 618-0021 (JP); TERAGUCHI, Yumiko, Mishima-gun, Osaka 618-0021 (JP); KAMOSHIDA, Naoki, Mishima-gun, Osaka 618-0021 (JP); OKADA, Yuuki, Mishima-gun, Osaka 618-0021 (JP); URADOKORO, Kanako, Mishima-gun, Osaka 618-0021 (JP)
(74) Representative: Ter Meer Steinmeister & Partner
(86) International application number: PCT/JP2022/024192
(87) International publication number: WO 2022/265075

(57) **Abstract**

The pressure-sensitive adhesive film of the present invention comprises a thermoplastic resin and has a thickness of 150 µm or more and 2000 µm or less, in which an amount of change in thickness of a test sample A in a predetermined compression creep test performed is 50 µm or more and 325 µm or less, and an adhesive force to a polycarbonate base material, as measured by a predetermined pressure-sensitive adhesive force measurement method, is 100 N or more. The laminate of the present invention comprises the pressure-sensitive adhesive film of the present invention, a first organic material substrate, and at least one base material of second organic material substrate and inorganic material substrate. The liquid crystal display of the present invention and the laminated glass of the present invention each comprises the laminate of the present invention. According to the present invention, there can be provided a pressure-sensitive adhesive film, a laminate comprising the pressure-sensitive adhesive film, and a liquid crystal display and a laminated glass each comprising the laminate, in which a transparency in low-temperature sticking is favorable, foaming in an end portion in low-temperature sticking is small, and adhesiveness to a resin material such as a polarization film is favorable.

## Description

### Technical Field

The present invention relates to a pressure-sensitive adhesive film, a laminate comprising the pressure-sensitive adhesive film, and a liquid crystal display and a laminated glass each comprising the laminate.

### Background Art

Pressure-sensitive adhesive films have been widely used in order to stack and fix surface protection panels, polarization plates, touch sensor-attached films, touch sensor-attached glass, and the like in various displays such as liquid crystal displays, organic EL displays, and touch panel-attached displays. (Meth)acrylic resins have been conventionally widely used in pressure-sensitive adhesive films from the viewpoint of transparency, pressure-sensitive adhesiveness, and/or the like. Use of polyvinyl acetal-based resins has also been studied besides use of (meth)acrylic resins.

With respect to use of polyvinyl acetal-based resins, there is known use of a plasticized polyvinyl acetal-based resin to which a certain amount or more of a plasticizer is compounded, as disclosed in PTLS 1 and 2. There is also studied compounding of a reactive diluent to be cured by light irradiation, in order to enable a plasticized polyvinyl acetal-based resin to be higher in storage elastic modulus by light irradiation.

Furthermore, there has been recently tried to introduce a light control film to laminated glass constituting window glass, in order to enable light permeability or the like to be adjusted. With respect to introduction of a light control film, there is known, for example, a configuration of laminated glass where a light control film is placed between two glass plates and the light control film and each of the glass plates are bonded with a resin film being interposed therebetween. There has been studied an application of a pressure-sensitive adhesive film comprising a plasticized polyvinyl acetal-based resin, to a resin film.

### Citation List

### Patent Literature

PTL 1: JP 6046811 B
PTL 2: JP 6116772 B

### Summary of Invention

### Technical Problem

Meanwhile, in the case of use in various displays and use in laminated glass into which a light control film is introduced, sticking is needed to be performed at a low temperature in order to prevent a display element and the light control film from being thermally degraded.

However, a problem easily caused in a conventional plasticized polyvinyl acetal-based resin widely used as a pressure-sensitive adhesive film has been that a laminate comprising a pressure-sensitive adhesive film, when stuck at a low temperature in production thereof, is insufficient in transparency and causes foaming in an end portion thereof.

A plasticized polyvinyl acetal-based resin has a difficulty in being sufficiently increased in adhesiveness to various resin materials, in particular, a resin material having low polarity. Therefore, a plasticized polyvinyl acetal-based resin, when used in displays or laminated glass into which a light control film is introduced, is sometimes allowed to adhere to a polarization film or a light control film, and has a difficulty in being sufficiently increased in adhesiveness to such a film.

An object of the present invention is to allow a pressure-sensitive adhesive film comprising a thermoplastic resin to not only be improved in transparency in low-temperature sticking and suppressed in foaming in an end portion, but also be improved in adhesiveness to various resin materials constituting a polarization film, a light control film, and the like.

### Solution to Problem

The present inventors have made intensive studies, and as a result, have found that the above problems can be solved by a pressure-sensitive adhesive film comprising a thermoplastic resin and having a predetermined thickness, in which not only the amount of change in thickness as measured in predetermined measurement conditions is within a predetermined range, but also the adhesive force to a polycarbonate base material as measured in predetermined measurement conditions is equal to or more than a predetermined value, and thus have completed the following present invention.

In other words, the present invention provides the following [1] to [33].
[1] A pressure-sensitive adhesive film comprising a thermoplastic resin and having a thickness of 150 µm or more and 2000 µm or less, wherein
   an amount of change in thickness of a test sample A in the following compression creep test performed is 50 µm or more and 325 µm or less, and
   an adhesive force to a polycarbonate base material, as measured by the following pressure-sensitive adhesive force measurement method, is 100 N or more:
      <Compression creep test>
   a test sample A having a size of a diameter of 8 mm, obtained by cutting out a pressure-sensitive adhesive film, is compressed under conditions of a load of 410 g and 30°C for 30 minutes and then a thickness (A) of the test sample A is measured; thereafter, a temperature is raised from 30°C to 90°C at a rate of temperature rise of 6°C/min at a load of 410 g maintained; after compression under conditions of a load of 410 g and 90°C for 5 minutes, a thickness (B) of the test sample A is measured; and an absolute value of a difference between the thickness (A) and the thickness (B) of the test sample A is defined as the amount of change in thickness of the test sample A;
      <Adhesive force measurement method>
   a pressure-sensitive adhesive film having a size of a length of 15 mm and a width of 15 mm and two sheets of polycarbonate plate glass each having a thickness of 2 mm, a length of 25 mm and a width of 100 mm, according to JIS K6735, are provided; the two sheets of polycarbonate plate glass are placed and stacked crisscross with the pressure-sensitive adhesive film being interposed therebetween so that longitudinal directions of the sheets are perpendicular to each other; thereafter, the two sheets of polycarbonate plate glass stacked with the pressure-sensitive adhesive film being interposed therebetween are subjected to temporary compression bonding under conditions of 90°C and 0.1 MPa for 3 minutes in a vacuum laminator by use of a spacer having the same thickness as that of the pressure-sensitive adhesive film so that a thickness of the pressure-sensitive adhesive film is constant; next, the two sheets of polycarbonate plate glass subjected to temporary compression bonding are further subjected to main compression bonding under conditions of 90°C and 0.5 MPa for one hour, thereby obtaining a laminated glass sample; and a maximum load (N) in release of one polycarbonate plate glass from other polycarbonate plate glass in the laminated glass sample obtained, in a direction perpendicular to an adhesive surface at a rate of 10 mm/min under an environment at a temperature of 23°C, is measured, and the maximum load (N) is defined as the adhesive force.
[2] The pressure-sensitive adhesive film according to [1], wherein a maximum peak temperature of tanδ is 10°C or more and 52°C or less.
[3] The pressure-sensitive adhesive film according to [1] or [2], wherein a shear storage elastic modulus at 85°C is 0.06 × 10⁶ Pa or more.
[4] The pressure-sensitive adhesive film according to any of [1] to [3], comprising no plasticizer, or comprising less than 20 parts by mass of a plasticizer based on 100 parts by mass of the thermoplastic resin.
[5] The pressure-sensitive adhesive film according to any of [1] to [4], wherein a thickness is 150 µm or more and 1500 µm or less.
[6] The pressure-sensitive adhesive film according to any of [1] to [5], wherein the thermoplastic resin is a polyvinyl acetal-based resin.
[7] The pressure-sensitive adhesive film according to [6], wherein a weight-average molecular weight (Mw) of the polyvinyl acetal-based resin is 50,000 or more and 800,000 or less.
[8] The pressure-sensitive adhesive film according to [6] or [7], wherein the polyvinyl acetal-based resin has a polyalkylene oxide structure represented by the following formula (1): 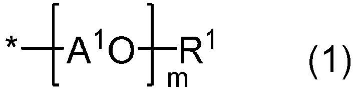 wherein A¹O represents an oxyalkylene group having 2 to 6 carbon atoms, and m represents an average number of repeating and is 4 to 200; R¹ represents an alkyl group having 1 to 8 carbon atoms, or a hydrogen atom, in which the oxyalkylene group is optionally adopted singly or as a mixture of two or more kinds thereof; and * represents a position of binding with other group.
[9] The pressure-sensitive adhesive film according to [8], wherein R¹ in the formula (1) represents an alkyl group.
[10] The pressure-sensitive adhesive film according to [6] or [7], wherein the polyvinyl acetal-based resin has a polyalkylene oxide structure.
[11] The pressure-sensitive adhesive film according to any of [8] to [10], wherein the polyalkylene oxide structure contains at least any of an oxyethylene group or an oxypropylene group.
[12] The pressure-sensitive adhesive film according to any of [8] to [11], wherein the polyalkylene oxide structure is linked to a main chain via a single bond, or any of an ether bond, an ester bond, an amide bond, and a hydrocarbon group optionally having at least any of these bonds.
[13] The pressure-sensitive adhesive film according to any of [8] to [12], wherein an amount of modification by the polyalkylene oxide structure is 0.1% by mol or more and 10% by mol or less.
[14] The pressure-sensitive adhesive film according to any of [6] to [13], wherein a degree of acetalization is 60% by mol or more.
[15] The pressure-sensitive adhesive film according to any of [6] to [14], wherein a degree of acetalization of the polyvinyl acetal-based resin is 60% by mol or more and 90% by mol or less.
[16] The pressure-sensitive adhesive film according to any of [6] to [15], wherein an amount of a hydroxyl group in the polyvinyl acetal-based resin is 5% by mol or more and 35% by mol or less.
[17] The pressure-sensitive adhesive film according to any one of [6] to [16], wherein a degree of acetylation of the polyvinyl acetal-based resin is 0.01% by mol or more and 50% by mol or less.
[18] The pressure-sensitive adhesive film according to any of [6] to [17], wherein the polyvinyl acetal-based resin is a polyvinyl butyral-based resin.
[19] The pressure-sensitive adhesive film according to any of [6] to [18], wherein a content of the polyvinyl acetal-based resin is 50% by mass or more and 100% by mass or less based on a total amount of the thermoplastic resin comprised in the pressure-sensitive adhesive film.
[20] The pressure-sensitive adhesive film according to any of [1] to [19], for use in the bonding of a first organic material substrate and a second organic material substrate or inorganic material substrate.
[21] The pressure-sensitive adhesive film according to any of [1] to [20], wherein the first organic material substrate and the second organic material substrate are at least one organic material substrate selected from the group consisting of a polarization film, a polyethylene terephthalate film, a polycarbonate plate, and a (meth)acrylic plate.
[22] The pressure-sensitive adhesive film according to any of [1] to [21], not containing a low-molecular weight compound having a molecular weight of less than 1000 or containing less than 20 parts by mass of the compound based on 100 parts by mass of the thermoplastic resin.
[23] The pressure-sensitive adhesive film according to any of [1] to [22], wherein the plasticizer is at least one selected from the group consisting of an organic ester plasticizer, an organic phosphorus-based plasticizer, an organic ether-based plasticizer, and an alcohol-based plasticizer.
[24] The pressure-sensitive adhesive film according to any of [1] to [23], wherein the pressure-sensitive adhesive film comprises at least one selected from the group consisting of an ester of glycol and a monobasic organic acid, an ester compound of a dibasic organic acid having 4 to 12 carbon atoms and an alcohol having 4 to 10 carbon atoms, a polyalkylene glycol-based plasticizer, and a polyoxyalkylene ether-based plasticizer, in the plasticizer.
[25] A laminate comprising the pressure-sensitive adhesive film according to any of [1] to [24], a first organic material substrate, and at least one base material of second organic material substrate and inorganic material substrate.
[26] The laminate according to [25], wherein the base material constitutes at least one portion of a touch panel, a light control element, and a display element.
[27] The laminate according to [25] or [26], comprising an interlayer member placed between the paired base materials, and an adhesive film placed between each of the base materials and the interlayer member, wherein at least any of such adhesive films is the pressure-sensitive adhesive film.
[28] The laminate according to [27], wherein at least any of an inorganic material substrate and an organic material substrate is placed on a location at which the pressure-sensitive adhesive film on the interlayer member adheres.
[29] The laminate according to [27] or [28], wherein the interlayer member is any of a touch panel and a light control element.
[30] A liquid crystal display comprising the laminate according to any of [25] to [29].
[31] A laminated glass comprising the laminate according to any of [25] to [29].
[32] Use of the pressure-sensitive adhesive film according to any of [1] to [24], in a display.
[33] Use of the pressure-sensitive adhesive film according to any of [1] to [24], in laminated glass.

### Advantageous Effects of Invention

The present invention enables a pressure-sensitive adhesive film comprising a thermoplastic resin to not only be improved in transparency in low-temperature sticking and suppressed in foaming in an end portion, but also be improved in adhesiveness to a resin material such as a polarization film.

### Brief Description of Drawings

[Fig. 1] Fig. 1 is a cross-sectional view illustrating a laminate according to a first embodiment.
[Fig. 2] Fig. 2 is a cross-sectional view illustrating a laminate according to a second embodiment.
[Fig. 3] Fig. 3 is a cross-sectional view illustrating a laminate according to a third embodiment.
[Fig. 4] Fig. 4 is a cross-sectional view illustrating a laminate according to a fourth embodiment.
[Fig. 5] Fig. 5 is a perspective view for describing a cross tension test.
[Fig. 6] Fig. 6(a) to (e) are examples of images each used for evaluation of foaming in an end portion of laminated glass.
[Fig. 7] Fig. 7(a) to (e) are examples of images each used for evaluation of transparency of laminated glass.
[Fig. 8] Fig. 8 is a plan view for describing a method for measuring an adhesive force to a TAC polarization plate.

### Description of Embodiments

### <Pressure-sensitive adhesive film>

The pressure-sensitive adhesive film of the present invention is a pressure-sensitive adhesive film comprising a thermoplastic resin and having a thickness of 150 µm or more and 2000 µm or less, in which the amount of change in thickness in a compression creep test performed in predetermined measurement conditions is 50 µm or more and 325 µm or less, and the adhesive force to a polycarbonate base material, as measured in predetermined measurement conditions, is 100 N or more.

The pressure-sensitive adhesive film of the present invention has the foregoing configuration, and thus can not only be improved in transparency in low-temperature sticking and suppressed in foaming in an end portion, but also be improved in adhesiveness to a resin material such as a polarization film.

Hereinafter, a pressure-sensitive adhesive film according to one embodiment of the present invention is described in detail.

### [Thickness]

The thickness of the pressure-sensitive adhesive film of the present invention is 150 µm or more and 2000 µm or less. When the thickness is less than 150 µm, a failure is caused, for example, adhesiveness cannot be sufficiently ensured. When the thickness is more than 2000 µm, a failure is caused, for example, a laminate obtained by sticking with the pressure-sensitive adhesive film of the present invention cannot be thin. The thickness of the pressure-sensitive adhesive film is preferably 150 µm or more and 1500 µm or less from these viewpoints. In order to enhance adhesiveness of the pressure-sensitive adhesive film, the thickness of the pressure-sensitive adhesive film is preferably larger and larger, and is more preferably 200 µm or more, further preferably 300 µm or more. The thickness of the pressure-sensitive adhesive film is more preferably 1200 µm or less from the viewpoint of thinning.

### [Amount of change in thickness]

The amount of change in thickness of the pressure-sensitive adhesive film of the present invention, as measured in predetermined measurement conditions, is 50 µm or more and 325 µm or less.

When the amount of change in thickness is less than 50 µm, the remaining air may be increased to cause insufficient transparency in the case of sticking performed at a low temperature. When the amount of change in thickness is more than 325 µm, foaming ability in an end portion of the pressure-sensitive adhesive film in low-temperature sticking may be increased. The reason for this is considered because the pressure-sensitive adhesive film is so soft that a gas dissolved in the pressure-sensitive adhesive film is released in the form of bubbles from the pressure-sensitive adhesive film.

Herein, sticking of an adherend using the pressure-sensitive adhesive film of the present invention generally involves temporary compression bonding and main adhesion to be thereafter performed, and both temporary compression bonding and main adhesion may be performed at a low temperature of, for example, 100°C or less. While low-temperature sticking at 100°C or less hardly allows air and/or foam occurring in temporary compression bonding to be removed even in main compression bonding, the pressure-sensitive adhesive film of the present invention has an amount of change in thickness, falling within the predetermined range, and thus hardly causes the occurrence of the remaining air and foam in temporary compression bonding, thereby allowing the remaining air and foam to be hardly found even after main adhesion.

The amount of change in thickness is preferably 75 to 300 µm, more preferably 100 to 250 µm from the viewpoint of not only an improvement in transparency of the pressure-sensitive adhesive film in low-temperature sticking, but also suppression of foaming in an end portion of the pressure-sensitive adhesive film.

The amount of change in thickness of the pressure-sensitive adhesive film is preferably 80% or less relative to the thickness of the pressure-sensitive adhesive film. The amount of change in thickness is important from the viewpoint of transparency of the pressure-sensitive adhesive film in low-temperature sticking and suppression of foaming in an end portion of the pressure-sensitive adhesive film. However, in the case of a thin pressure-sensitive adhesive film, such a pressure-sensitive adhesive film is needed to be much largely compressed in a compression creep test described below in order to realize the amount of change. Such a pressure-sensitive adhesive film to be likely compressed, even if preferred in terms of transparency of the pressure-sensitive adhesive film in low-temperature sticking and suppression of foaming in an end portion of the pressure-sensitive adhesive film, is not sometimes preferred from the viewpoint of other physical properties. Thus, the amount of change in thickness of the pressure-sensitive adhesive film is preferably 80% or less relative to the thickness of the pressure-sensitive adhesive film. The amount of change in thickness of the pressure-sensitive adhesive film is more preferably 60% or less, further preferably 50% or less relative to the thickness of the pressure-sensitive adhesive film from the above viewpoints. The lower limit value of the amount of change in thickness is not particularly limited, and may be, for example, 5% or more, or 10% or more.

The method for measuring the amount of change in thickness of the pressure-sensitive adhesive film is performed by the following compression creep test.

First, a test sample A having a size of a diameter of 8 mm is obtained by cutting out the pressure-sensitive adhesive film. Next, the test sample A is compressed under conditions of a load of 410 g and 30°C for 30 minutes and then the thickness (A) of the test sample A is measured under compression. Thereafter, the temperature is raised from 30°C to 90°C at a rate of temperature rise of 6°C/min at a load of 410 g maintained. After compression under conditions of a load of 410 g and 90°C for 5 minutes, the thickness (B) of the test sample A is measured under compression. The absolute value of the difference between the thickness (A) and the thickness (B) of the test sample A is defined as the amount of change in thickness of the test sample A.

### [Adhesive force]

The adhesive force to a polycarbonate base material, as measured in predetermined measurement conditions, is 100 N or more, in the pressure-sensitive adhesive film of the present invention. The polycarbonate base material is a resin which has a low polarity and which hardly adheres to a resin constituting the pressure-sensitive adhesive film, for example, a polyvinyl acetal-based resin, and in the present invention, the adhesive force is 100 N or more to allow the pressure-sensitive adhesive film to be enhanced in adhesive force to a resin material such as a polarization film. In this regard, if the adhesive force is less than 100 N, the adhesive force to a resin material such as a polarization film may be insufficient. The adhesive force is preferably 200 N or more from the viewpoint of a more enhancement in adhesive force to various resin materials such as a polarization film.

The adhesive force is preferably higher and higher, and may be usually 1000 N or less or may be 600 N or less.

The method for measuring the above adhesive force to a polycarbonate base material is performed with respect to a laminated glass sample obtained by undergoing the following first, second and third processes in the listed order.

First process: a pressure-sensitive adhesive film having a size of a length of 15 mm and a width of 15 mm and two sheets of polycarbonate plate glass each having a thickness of 2 mm, a length of 25 mm and a width of 100 mm, according to JIS K6735, are provided; and the two sheets of polycarbonate plate glass are placed and stacked crisscross with the pressure-sensitive adhesive film being interposed therebetween so that longitudinal directions of the sheets are perpendicular to each other.

Second process: the two sheets of polycarbonate plate glass stacked with the pressure-sensitive adhesive film being interposed therebetween are subjected to temporary compression bonding under conditions of 90°C and 0.1 MPa for 3 minutes in a vacuum laminator by use of a spacer having the same thickness as that of the pressure-sensitive adhesive film so that the thickness of the pressure-sensitive adhesive film is constant.

Third process: the two sheets of polycarbonate plate glass subjected to temporary compression bonding are further subjected to main compression bonding under conditions of 90°C and 0.5 MPa for one hour, thereby obtaining a laminated glass sample.

Next, the laminated glass sample obtained is subj ected to a cross tension test. Specifically, the maximum load (N) in release of one polycarbonate plate glass from other polycarbonate plate glass in a direction perpendicular to an adhesive surface at a rate of 10 mm/min under an environment at 23°C is measured and the maximum load (N) is defined as the adhesive force.

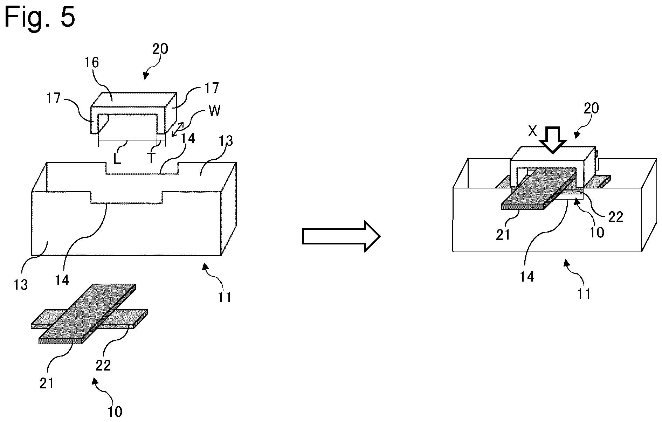

More specifically, the sample may be set to a tool illustrated in Fig. 5 and the adhesive force may be measured. The tool is composed of a casing 11 and a pressing member 20. The casing 11 and the pressing member 20 is composed of SUS. The casing 11 has a cuboid shape having an opened upper surface, and rectangular notches 14 and 14 are provided on upper end surfaces of side surfaces 13 and 13 facing to each other. The pressing member 20 is a U-shaped member where a rectangular base portion 16 and pressing pieces 17 and 17 perpendicularly connected to both end portions in a longitudinal direction of the base 16 are provided. Each of the pressing pieces 17 has a width W of 20 mm and a thickness T of 5 mm, and the distance L between the pressing pieces 17 and 17 is 35 mm.

A laminated glass sample 10 is placed so that one polycarbonate plate glass 21 is hung between the notches 14 and 14 so as to allow other polycarbonate plate 22 to be placed below. The maximum load (N) in release of polycarbonate plate glass 31 at a rate of 10 mm/min by action of a load in a vertically downward direction X as a direction perpendicular to an adhesive surface is measured, and the adhesive force (N) is determined from the maximum load (N). The adhesive force (N) is an adhesive force based on an area of 225 mm². In a case where the adhesive force is large and the polycarbonate plate glass is deformed in measurement in the cross tension test, the measurement is preferably made with a polycarbonate base material, if necessary, reinforced by increasing the thickness of the polycarbonate base material or attaching SUS or the like to a surface opposite to the adhesive surface.

### [Maximum peak temperature of tanδ]

The maximum peak temperature of tan6 of the pressure-sensitive adhesive film in the present invention is preferably 10°C or more and 52°C or less. When the maximum peak temperature of tanδ is 52°C or less, a resin film is sufficiently flexible and adhesiveness to a resin material such as a polarization film can be improved. In addition, transparency of the pressure-sensitive adhesive film in low-temperature sticking can also be improved. The maximum peak temperature of tanδ of a resin composition is preferably 48°C or less, further preferably 44°C or less, still further preferably 42°C or less from the viewpoint of an increase in flexibility and an enhancement in adhesiveness.

When the maximum peak temperature of tanδ is 10°C or more, foaming ability in an end portion of the pressure-sensitive adhesive film in low-temperature sticking can be further suppressed. The maximum peak temperature of tanδ of a resin composition is preferably 12°C or more, more preferably 20°C or more.

The maximum peak temperature of tan6 of the resin film can be detected by reading the peak temperature at which the loss tangent tanδ obtained from the viscoelasticity measurement result in viscoelasticity measurement performed with a dynamic viscoelasticity measurement apparatus is a maximum value.

### [Shear storage elastic modulus]

The shear storage elastic modulus at 85°C of the pressure-sensitive adhesive film of the present invention is preferably 0.06 × 10⁶ Pa or more. When the shear storage elastic modulus is 0.06 × 10⁶ Pa or more, foaming in an end portion of the pressure-sensitive adhesive film in low-temperature sticking can be further suppressed. The shear storage elastic modulus at 85°C is more preferably 0.10 × 10⁶ Pa or more, further preferably 0.20 × 10⁶ Pa or more from the viewpoint of suppression of foaming in an end portion of the pressure-sensitive adhesive film in low-temperature sticking.

The shear storage elastic modulus at 85°C of the pressure-sensitive adhesive film is preferably higher from the viewpoint of suppression of foaming in an end portion of the pressure-sensitive adhesive film in low-temperature sticking, and is, for example, 5 × 10⁶ Pa or less, preferably 2 × 10⁶ Pa or less, further preferably 1 × 10⁶ Pa or less from the viewpoint of an improvement in balance with other physical properties or the like.

The shear storage elastic modulus can be measured by performing viscoelasticity measurement in a shear mode at a frequency of 1 Hz with a dynamic viscoelasticity measurement apparatus, and detecting the storage elastic modulus (G') at 85°C.

The amount of change in thickness, the rate of change in thickness, the adhesive force, the maximum peak temperature of tanδ and the shear storage elastic modulus can be adjusted by appropriately selecting the type of a resin, the molecular weight of a resin, the presence of compounding of a plasticizer, the content of a plasticizer, and the like.

### [Thermoplastic resin]

Examples of the thermoplastic resin for use in the pressure-sensitive adhesive film include a (meth)acrylic resin, a polyvinyl acetal-based resin, a polyvinyl alcohol-based resin (PVA), a polyurethane-based resin (PU), an ethylene-vinyl acetate copolymer resin (EVA), an ethylene-vinyl acetate copolymer saponified product (EVOH), an ethylene-methacrylic acid copolymer resin, an ionomer resin, an isobutylene resin, a styrene-isoprene copolymer resin, and a styrene-butadiene copolymer resin.

The thermoplastic resin in the pressure-sensitive adhesive film may be used singly or in combinations of two or more kinds.

The thermoplastic resin is, in particular, preferably a polyvinyl acetal-based resin. The polyvinyl acetal-based resin is used to easily result in not only an improvement in transparency in low-temperature sticking and suppression of foaming in an end portion, but also an improvement in adhesiveness to a resin material such as a polarization film. Hereinafter, the polyvinyl acetal-based resin for use in the thermoplastic resin is described in detail.

### [Polyvinyl acetal-based resin]

The thermoplastic resin is preferably a polyvinyl acetal-based resin, as described above. The polyvinyl acetal-based resin may be a modified polyvinyl acetal resin or may be an unmodified polyvinyl acetal resin. The modified polyvinyl acetal resin may have a structure (modified group) other than an acetal group, a hydroxyl group, and an acetyl group, as described below, and preferably has a modified group in a side chain.

The polyvinyl acetal-based resin is obtained by acetalizing a polyvinyl alcohol with an aldehyde, and furthermore, if necessary, reacting the resultant with a modifying agent or subjecting the resultant to a re-acetylation treatment. The modified polyvinyl acetal resin may also be obtained by using a modified polyvinyl alcohol as a polyvinyl alcohol serving as a raw material.

The structure other than an acetal group, a hydroxyl group, and an acetyl group is preferably a polyalkylene oxide structure. The polyalkylene oxide structure is specifically as represented by the following formula (1). 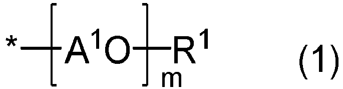 wherein A¹O represents an oxyalkylene group having 2 to 6 carbon atoms, and m represents an average number of repeating and is 4 to 200; R¹ represents an alkyl group having 1 to 8 carbon atoms, or a hydrogen atom, in which the oxyalkylene group is optionally adopted singly or as a mixture of two or more kinds thereof; and * represents a position of binding with other group.

The oxyalkylene group in A¹O is an oxyalkylene group having 2 to 6 carbon atoms, preferably an oxyalkylene group having 2 to 4 carbon atoms, more preferably an oxyalkylene group having 2 to 3 carbon atoms. When the number of carbon atoms in the oxyalkylene group is within the above range, not only the transparency in low-temperature sticking is improved and foaming in an end portion is suppressed, but also adhesiveness to a resin material such as a polarization film is easily improved.

The alkylene group in the oxyalkylene group may be straight or may have a branched structure. Examples of the oxyalkylene group include an oxyethylene group, an oxypropylene group, or an oxybutylene group, and an oxyethylene group or an oxypropylene group is preferable. The oxyalkylene group may be used singly or in combinations of two or more kinds thereof. In a case where two or more kinds of such oxyalkylene groups are used in combination, such each oxyalkylene group may be added in a random or block form, and is preferably added in a random form.

The oxyalkylene group in the polyalkylene oxide structure preferably contains at least any of an oxyethylene group and an oxypropylene group, or also preferably contains both an oxyethylene group and an oxypropylene group. In a case where both an oxyethylene group and an oxypropylene group are contained, these groups may constitute a block structure and more preferably constitute a random structure. In a case where an oxyethylene group (EO) and an oxypropylene group (PO) are contained, the ratio of the oxypropylene group to the oxyethylene group (PO/EO), in terms of molar ratio, is, for example, 1/9 or more and 9/1 or less, preferably 2/8 or more and 8/2 or less, more preferably 3/7 or more and 7/3 or less.

In the formula (1), m represents the average number of repeating of such oxyalkylene groups, is 4 to 200, preferably 5 to 100, more preferably 10 to 80, further preferably 15 to 50.

The alkyl group in R¹ may be straight, or may have a branched structure.

Examples of the alkyl group in R¹ include a methyl group, an ethyl group, a n-propyl group, an isopropyl group, a n-butyl group, branched butyl groups such as a s-butyl and a t-butyl group, a n-pentyl group, branched pentyl groups, a n-hexyl group, branched hexyl groups, a n-heptyl group, branched heptyl groups such as an isoheptyl group and a 3-heptyl group, a n-octyl group, and branched octyl groups such as an isooctyl group and a 2-ethylhexyl group.

R¹ preferably represents an alkyl group having 1 to 6 carbon atoms, or a hydrogen atom, more preferably an alkyl group having 1 to 4 carbon atoms, or a hydrogen atom.

The polyalkylene oxide structure may be linked to a main chain via a single bond, and is preferably linked to a main chain via a linking group other than a single bond.

Examples of the linking group other than a single bond include an ether bond (-O-), an ester bond (-COO-), an amide bond (-CONR-: R represents a hydrogen atom or an alkyl group having 1 to 4 carbon atoms, preferably a hydrogen atom), or a hydrocarbon group optionally having at least any of these bonds. In particular, an ether bond (-O-), an ester bond (-COO-), or a hydrocarbon group optionally having at least any of these bonds is more preferable. The number of carbon atoms in the hydrocarbon group is not particularly limited, may be, for example, about 1 to 10, and is preferably 1 to 4. In particular, the polyalkylene oxide structure is more preferably bound to a main chain via any of an ether bond or -CH₂O-. The polyalkylene oxide structure, when bound to a main chain via any thereof, thus is easily produced. Here, an oxygen atom in -CH₂O- may be bound to the polyalkylene oxide structure.

The polyvinyl acetal-based resin typically has an acetal group, a hydroxyl group, and an acetyl group. It is noted that the polyvinyl acetal-based resin may be modified by a functional group or subjected to re-acetylation reaction to contain no hydroxyl group. Here, such acetal group, hydroxyl group, and acetyl group are each a group bound to a main chain directly or via an oxygen atom, as represented by formula (3-1) to formula (3-3) described below, and do not encompass any hydroxyl group contained in the polyalkylene oxide structure.

The polyvinyl acetal-based resin is preferably modified to have the polyalkylene oxide structure represented by the formula (1), as described above. Hereinafter, the polyvinyl acetal-based resin, which has the polyalkylene oxide structure, may be described as a modified polyvinyl acetal resin (A) so as to be described with being distinguished from other polyvinyl acetal-based resin.

The amount of modification of the modified polyvinyl acetal resin (A) by the polyalkylene oxide structure (namely, the functional group represented by the formula (1)) is preferably 0.1% by mol or more and 10% by mol or less. When the amount of modification is 0.1% by mol or more, the amount of change in thickness of the test sample A in the compression creep test performed can be increased and transparency in low-temperature sticking can be improved. When the amount of modification is within the above range, the adhesive force to a resin material such as a polarization film can be enhanced.

The amount of modification by the polyalkylene oxide structure is preferably 0.2% by mol or more, more preferably 0.3% by mol or more, further preferably 0.4% by mol or more, and preferably 8% by mol or less, more preferably 6% by mol or less, further preferably 4% by mol or less from these viewpoints.

The amount of modification by the functional group represents the proportion of the functional group relative to the total vinyl monomer unit constituting the polyvinyl acetal-based resin. The amount of modification can be calculated from a spectrum obtained by subjecting the polyvinyl acetal-based resin to proton NMR measurement. The degree of acetalization, the amount of a hydroxyl group, and the degree of acetylation, described below, can also be each calculated from a spectrum obtained by proton NMR measurement performed.

The polyvinyl acetal-based resin does not optionally have the polyalkylene oxide structure. Such a polyvinyl acetal-based resin may be a modified polyvinyl acetal resin having a modified group other than the functional group represented by the formula (1), or may be an unmodified polyvinyl acetal resin. Even such an unmodified polyvinyl acetal resin allows the adhesive force to a resin material such as a polarization film to be easily increased, by decreasing the amount of a hydroxyl group, as described below, due to re-acetylation reaction or the like and thus decreasing the maximum peak temperature of tanδ.

Examples of the modified group other than the functional group represented by the formula (1) include an alkyl group. The alkyl group may be straight or may have a branched structure. The number of carbon atoms in the alkyl group is, for example, 2 to 30, preferably 3 to 24, more preferably 5 to 20, further preferably 7 to 18, still further preferably 11 to 18. The alkyl group may be directly bound to a main chain, preferably a constituent unit derived from a vinyl group constituting a main chain, and is preferably bound via an ether bond (-O-), a ester bond (*-COO-**), or a urethane bond (*-NHCOO-**), more preferably bound via an ester bond or a urethane bond.

Herein, "*" and "**" in the ester bond and the urethane bond each represent a position of binding to the alkyl group or the main chain, and, preferably, "*" represents a position of binding to the alkyl group and "**" represents a position of binding to the main chain in the respective bonds. R in the urethane bond is preferably a hydrogen atom.

The polyvinyl acetal-based resin may have a constituent unit derived from a vinyl group, as the main chain, and the functional group represented by the formula (1) may be bound to a constituent unit derived from a vinyl group constituting the main chain. Accordingly, the polyvinyl acetal-based resin preferably has a constituent unit represented by the following formula (2), and in particular, more preferably has any constituent unit represented by the following formula (2-1) and formula (2-2). 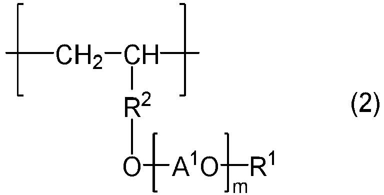 wherein A¹O, R¹, and m are the same as described above; and R² represents any of a single bond, or a hydrocarbon group optionally having at least any of an ester bond or an ether bond. 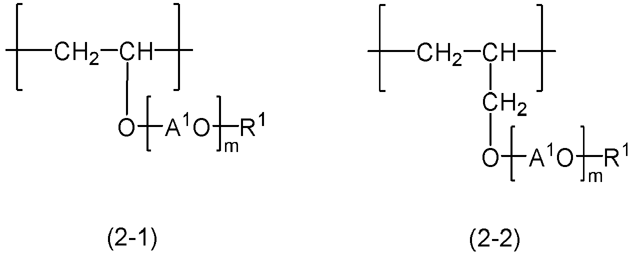 wherein A¹O, R¹, and m are the same as described above.

A¹O, R¹, and m in the formulae (2), (2-1), and (2-2) are as described above, and thus the description thereof is omitted. The number of carbon atoms in R² in the formula (2) is, for example, 1 to 10, preferably 1 to 4. The hydrocarbon group in R² optionally has an ester bond or an ether bond as described above, and preferably has neither an ester bond nor an ether bond.

The polyvinyl acetal-based resin typically has an acetal group, a hydroxyl group, and an acetyl group, namely, the polyvinyl acetal-based resin typically has constituent units represented by the following formula (3-1), formula (3-2) and formula (3-3). Accordingly, the modified polyvinyl acetal resin preferably has constituent units represented by the following formula (3-1), formula (3-2) and formula (3-3), and the constituent unit represented by the formula (2).

It is noted that the polyvinyl acetal-based resin, when is, for example, an unmodified polyvinyl acetal resin, has optionally no hydroxyl group as described above and has optionally no constituent unit represented by the formula (3-2). In other words, the unmodified polyvinyl acetal resin has constituent units represented by the following formula (3-1) and formula (3-3), and may optionally further have a constituent unit represented by the following formula (3-2). 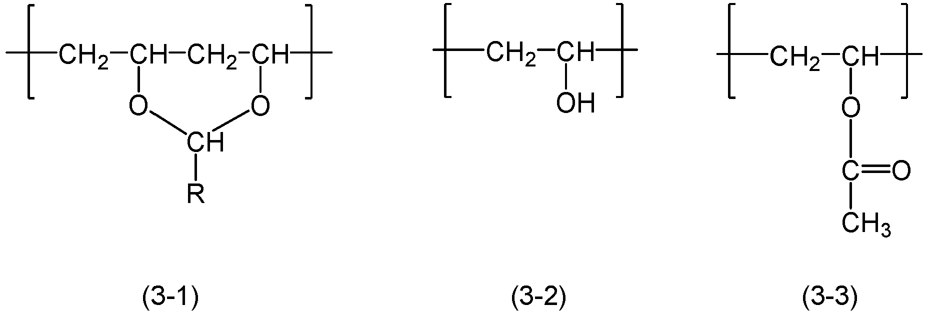 wherein R in the formula (3-1) represents a hydrogen atom or a hydrocarbon group having 1 to 19 carbon atoms.

The polyvinyl acetal-based resin is obtained by acetalizing a polyvinyl alcohol or a modified polyvinyl alcohol obtained by modification of a polyvinyl alcohol, with an aldehyde, and then, if necessary, modifying the resultant, as described above, and the polyvinyl alcohol here used is generally a polyvinyl alcohol having a degree of saponification of 80 to 99.8% by mol.

The number of carbon atoms in an acetal group contained in the polyvinyl acetal-based resin is not particularly limited, and is, for example, 1 to 20, preferably 2 to 10, more preferably 2 to 6, further preferably 2, 3 or 4, as represented by the formula (3-1). Accordingly, the number of carbon atoms in R represented by the formula (3-1) is preferably 1 to 9, more preferably 1 to 5, further preferably 1 to 3.

The acetal group is specifically particularly preferably a butyral group, and therefore the polyvinyl acetal-based resin is preferably a polyvinyl butyral-based resin. The degree of acetalization (namely, amount of acetal) of the polyvinyl acetal-based resin is preferably 60% by mol or more. The degree of acetalization is more preferably 55% by mol or more, further preferably 60% by mol or more, and preferably 90% by mol or less, more preferably 88% by mol or less, further preferably 85% by mol or less. When the degree of acetalization is within such a range, not only the amount of a hydroxyl group is a proper amount, but also the functional group represented by the formula (1) is easily contained in a certain amount.

The degree of acetalization means the degree of acetoacetalization in a case where an acetal group of the polyvinyl acetal-based resin is an acetoacetal group and means the degree of butyralization in a case where the acetal group is a butyral group.

The degree of acetalization represents the proportion of a vinyl alcohol unit acetalized relative to the total vinyl monomer unit constituting the polyvinyl acetal-based resin.

The amount of a hydroxyl group in the polyvinyl acetal-based resin is preferably 35% by mol or less, more preferably 33% by mol or less, further preferably 30% by mol or less. When the amount of a hydroxyl group is equal to or less than the upper limit value, the maximum peak temperature of tanδ is easily a suitable value and furthermore the adhesive force to a resin material such as a polarization film is easily increased.

The amount of a hydroxyl group in the polyvinyl acetal-based resin may be 0% by mol or more, and in the case of the modified polyvinyl acetal resin (A), the amount of a hydroxyl group may be a certain amount and is, for example, 5% by mol or more, preferably 9% by mol or more, more preferably 10% by mol or more, further preferably 12% by mol or more, from the viewpoint of preventing the pressure-sensitive adhesive film from being too flexible.

In a case where the polyvinyl acetal-based resin is, for example, an unmodified polyvinyl acetal resin, the amount of a hydroxyl group is needed to be low in order to decrease the maximum peak temperature of tanδ and increase the adhesive force to a resin having low polarity, for example, polycarbonate. Therefore, the amount of a hydroxyl group in the unmodified polyvinyl acetal resin is preferably 15% by mol or less, more preferably 10% by mol or less, further preferably 5% by mol or less, still further preferably 3% by mol or less, most preferably 0% by mol.

The amount of a hydroxyl group represents the proportion of a hydroxyl group relative to the total vinyl monomer unit constituting the polyvinyl acetal-based resin.

The degree of acetylation (amount of acetyl group) of the polyvinyl acetal-based resin is, for example, 0.01% by mol or more and 50% by mol or less, and in the case of the modified polyvinyl acetal resin (A), the degree of acetylation is also favorably equal to or less than a certain value so that the amount of modification by the functional group represented by the formula (1) is equal to or more than a certain value. Accordingly, the degree of acetylation of the modified polyvinyl acetal resin (A) is preferably 20% by mol or less, more preferably 15% by mol or less, further preferably 12% by mol or less, still further preferably 5% by mol or less.

The degree of acetylation of the modified polyvinyl acetal resin (A) is, for example, 0.01% by mol or more as described above, and is preferably 0.1% by mol or more, more preferably 0.3% by mol or more.

In the case of the unmodified polyvinyl acetal resin, the degree of acetylation is favorably equal to or more than a certain value, and is preferably 15% by mol or more, more preferably 25% by mol or more, further preferably 30% by mol or more from the viewpoint of a decrease in amount of a hydroxyl group and a decrease in maximum peak temperature of tanδ and thus an increase in adhesive force to a resin material such as a polarization film. The degree of acetylation of the unmodified polyvinyl acetal resin is, for example, 50% by mol or less as described above, and is preferably 45% by mol or less, further preferably 42% by mol or less.

The degree of acetylation represents the proportion of an acetyl group relative to the total vinyl monomer unit constituting the polyvinyl acetal-based resin.

The weight-average molecular weight (Mw) of the polyvinyl acetal-based resin is preferably 50,000 or more and 800,000 or less. When the weight-average molecular weight is 50,000 or more, the amount of change in thickness of the test sample A in the compression creep test performed can be decreased and foaming in an end portion in low-temperature sticking can be further suppressed. When the weight-average molecular weight (Mw) is 800,000 or less, adhesiveness to a resin material such as a polarization film is easily enhanced. The weight-average molecular weight (Mw) of the polyvinyl acetal-based resin is more preferably 100,000 or more, further preferably 120,000 or more, still further preferably 150,000 or more from these viewpoints. The weight-average molecular weight (Mw) is more preferably 600,000 or less, further preferably 500,000 or less, still further preferably 400,000 or less.

The weight-average molecular weight (Mw) is measured by gel permeation chromatography.

The aldehyde for use in the production of the polyvinyl acetal-based resin is not particularly limited, and is, for example, an aldehyde having 1 to 20 carbon atoms, and in general, an aldehyde having 2 to 10 carbon atoms is suitably used. The aldehyde having 2 to 10 carbon atoms is not particularly limited, and examples thereof include acetaldehyde, propionaldehyde, n-butylaldehyde, isobutylaldehyde, n-valeraldehyde, 2-ethylbutylaldehyde, n-hexylaldehyde, n-octylaldehyde, n-nonylaldehyde, n-decylaldehyde, and benzaldehyde. In particular, an aldehyde having 2 to 6 carbon atoms, such as acetaldehyde, n-butylaldehyde, n-hexylaldehyde, or n-valeraldehyde is preferable, an aldehyde having 2, 3, or 4 carbon atoms is more preferable, and n-butylaldehyde is further preferable. Such an aldehyde may be used singly or in combinations of two or more kinds thereof.

The polyvinyl acetal-based resin for use in the present invention may be used singly or in combinations of two or more kinds thereof.

In a case where the polyvinyl acetal-based resin is used as the thermoplastic resin in the pressure-sensitive adhesive film of the present invention, the pressure-sensitive adhesive film may comprise a thermoplastic resin other than the polyvinyl acetal-based resin as long as the effects of the present invention are exerted. Here, the polyvinyl acetal-based resin is preferably a main component. The thermoplastic resin other than the polyvinyl acetal-based resin is as described above.

Specifically, the content of the polyvinyl acetal-based resin is, for example, 50% by mass or more, preferably 70% by mass or more, more preferably 90% by mass or more, most preferably 100% by mass based on the total amount of the thermoplastic resin comprised in the pressure-sensitive adhesive film. Accordingly, the thermoplastic resin comprised in the pressure-sensitive adhesive film of the present invention may be one being composed of only the polyvinyl acetal-based resin.

### (Plasticizer)

The pressure-sensitive adhesive film of the present invention may comprise a plasticizer. The pressure-sensitive adhesive film can comprise a plasticizer and thus can be flexible, thereby exhibiting increased adhesiveness to a resin material such as a polarization film. Furthermore, transparency in low-temperature sticking can also be improved. Herein, the pressure-sensitive adhesive film of the present invention comprises no plasticizer, or even if comprising a plasticizer, comprises a small amount of a plasticizer. When the pressure-sensitive adhesive film comprises only a small amount of a plasticizer, or comprises no plasticizer, foaming in an end portion in low-temperature sticking can be further suppressed.

Even when the pressure-sensitive adhesive film of the present invention comprises a small amount of a plasticizer or comprises no plasticizer, the above predetermined thermoplastic resin can be used to allow for low-temperature sticking and also an improvement in adhesiveness to a resin material such as a polarization film.

The content of the plasticizer in the pressure-sensitive adhesive film is preferably less than 20 parts by mass based on 100 parts by mass of the thermoplastic resin comprised in the pressure-sensitive adhesive film. When the content of the plasticizer is less than 20 parts by mass, foaming in an end portion in low-temperature sticking can be further suppressed.

The content of the plasticizer is preferably 15 parts by mass or less, more preferably 10 parts by mass or less, further preferably 5 parts by mass or less, still further preferably 1 part by mass or less from the viewpoint of suppression of foaming in an end portion of the pressure-sensitive adhesive film in low-temperature sticking. The lower limit of the content of the plasticizer is 0 parts by mass.

The resin composition in the present invention optionally comprises no plasticizer or optionally comprises a plasticizer in the case of use of the modified polyvinyl acetal resin (A), and comprising a plasticizer easily enhances adhesiveness of a resin film. On the other hand, the resin composition favorably comprises a plasticizer from the viewpoint of an enhancement in adhesiveness of a resin film, in the case of use of the unmodified polyvinyl acetal resin.

Examples of the plasticizer include organic ester plasticizers, organic phosphorus-based plasticizers such as an organic phosphoric acid ester plasticizer and an organic phosphorous acid ester plasticizer, organic ether-based plasticizers such as a polyalkylene glycol-based plasticizer and a polyoxyalkylene ether-based plasticizer, and alcohol-based plasticizers.

The plasticizer may be used singly or in combinations of two or more kinds thereof. In particular, an organic ester plasticizer is preferable. Preferred examples of such an organic ester plasticizer include monobasic organic acid ester and polybasic organic acid ester.

Examples of the monobasic organic acid ester include ester of glycol and a monobasic organic acid. Examples of the glycol include a polyalkylene glycol where each alkylene unit has 2 to 4 carbon atoms, preferably 2 or 3 carbon atoms, and the number of such alkylene units repeated is 2 to 10, preferably 2 to 4. The glycol may also be a monoalkylene glycol (namely, the number of repeating unit is 1) having 2 to 4 carbon atoms, preferably 2 or 3 carbon atoms.

Specific examples of the glycol include ethylene glycol, diethylene glycol, triethylene glycol, tetraethylene glycol, propylene glycol, dipropylene glycol, tripropylene glycol, tetrapropylene glycol, and butylene glycol.

Examples of the monobasic organic acid include an organic acid having 3 to 10 carbon atoms, and specifically include butyric acid, isobutyric acid, caproic acid, 2-ethylbutyric acid, heptylic acid, n-octylic acid, 2-ethylhexylic acid, n-nonylic acid and decylic acid.

Specific examples of the monobasic organic acid include triethylene glycol di-2-ethyl butyrate, triethylene glycol di-2-ethyl hexanoate, triethylene glycol dicaprylate, triethylene glycol di-n-octanoate, triethylene glycol di-n-heptanoate, tetraethylene glycol di-n-heptanoate, tetraethylene glycol di-2-ethyl hexanoate, diethylene glycol di-2-ethyl butyrate, diethylene glycol di-2-ethyl hexanoate, dipropylene glycol di-2-ethyl butyrate, triethylene glycol di-2-ethyl pentanoate, tetraethylene glycol di-2-ethyl butyrate, diethylene glycol dicaprylate, triethylene glycol di-n-heptanoate, tetraethylene glycol di-n-heptanoate, triethylene glycol di-2-ethyl butyrate, ethylene glycol di-2-ethyl butyrate, 1,2-propylene glycol di-2-ethyl butyrate, 1,3-propylene glycol di-2-ethyl butyrate, 1,4-butylene glycol di-2-ethyl butyrate, and 1,2-butylene glycol di-2-ethyl butyrate.

Examples of the polybasic organic acid ester include an ester compound of a dibasic organic acid having 4 to 12 carbon atoms, such as adipic acid, sebacic acid or azelaic acid, and an alcohol having 4 to 10 carbon atoms. The alcohol having 4 to 10 carbon atoms may be straight, may have a branched structure, or may have a cyclic structure.

Specific examples include dibutyl sebacate, dioctyl azelate, dihexyl adipate, dioctyl adipate, hexylcyclohexyl adipate, diisononyl adipate, heptylnonyl adipate, dibutylcarbitol adipate, and a mixed adipic acid ester. For example, an oil-modified sebacic acid alkyd may also be adopted. Examples of the mixed adipic acid ester include an adipate produced from two or more alcohols selected from an alkyl alcohol having 4 to 9 carbon atoms and a cyclic alcohol having 4 to 9 carbon atoms.

Examples of the organic phosphorus-based plasticizer include phosphoric acid ester such as tributoxyethyl phosphate, isodecylphenyl phosphate and triisopropyl phosphate.

The organic ester plasticizer is not limited to any complete ester of each of the above esters, and may be a partial ester thereof. For example, the organic ester plasticizer may be a partial ester of glycol and a monobasic organic acid, or a partial ester of a dibasic organic acid and an alcohol. Specific examples include triethylene glycol-mono-2-ethyl hexanoate.

The organic ester plasticizer may also be a partial ester of a tri- or higher-hydric alcohol such as glycerin and a monobasic organic acid. Examples of such a monobasic organic acid include a monobasic organic acid having 3 to 24 carbon atoms, preferably 6 to 18 carbon atoms. Specific examples of the partial ester of a tri- or higher-hydric alcohol and such a monobasic organic acid include a mono- or di-ester of glycerin and stearic acid, and a mono- or di-ester of glycerin and 2-ethylhexylic acid.

In particular, triethylene glycol-di-2-ethyl hexanoate (3GO) is particularly suitably used as the organic ester plasticizer.

Examples of the polyalkylene glycol-based plasticizer include polyethylene glycol, polypropylene glycol, a polyethylene oxide/propylene oxide) block copolymer, a poly(ethylene oxide/propylene oxide) random copolymer, and polytetramethylene glycol, and in particular, polypropylene glycol is preferable.

The polyoxyalkylene ether-based plasticizer is an ether compound of a monohydric or polyhydric alcohol and polyoxyalkylene.

Specific examples of the polyoxyalkylene ether-based plasticizer include polyoxyethylene hexyl ether, polyoxyethylene heptyl ether, polyoxyethylene octyl ether, polyoxyethylene-2-ethylhexyl ether, polyoxyethylene nonyl ether, polyoxyethylene decyl ether, polyoxyethylene allyl ether, polyoxypropylene allyl ether, polyoxyethylene glyceryl ether, polyoxypropylene glyceryl ether, polyoxyethylene diglyceryl ether, polyoxypropylene diglyceryl ether, and polyoxyalkylene pentaerythritol ether.

The polyoxyalkylene ether-based plasticizer is preferably an ether compound of a polyhydric alcohol and polyoxyalkylene, more preferably an ether compound of glycerin or diglycerin and polyoxyalkylene, further preferably an ether compound of glycerin or diglycerin and polyoxypropylene.

Examples of the alcohol-based plasticizer include various polyhydric alcohols such as butanediol, hexanediol, trimethylolpropane, and pentaerythritol. In particular, trimethylolpropane is preferable.

The pressure-sensitive adhesive film may appropriately comprise a known additive to be used in combination with the thermoplastic resin, besides the plasticizer. In other words, the pressure-sensitive adhesive film may be one being composed of the thermoplastic resin, for example, the polyvinyl acetal-based resin, and may comprise the plasticizer, if necessary, compounded, or an additive other than the plasticizer, in addition to the thermoplastic resin.

Specific examples of the additive other than the plasticizer include an ultraviolet absorber, an infrared absorber, an antioxidant, a light stabilizer, an adhesive force modifier, a pigment, a dye, a fluorescent whitener, and a crystal nucleator. The resin composition in the present invention may be diluted with a solvent and then used in the form of a diluted liquid.

The pressure-sensitive adhesive film preferably comprises no low-molecular weight compound, or even if comprising a low-molecular weight compound, preferably comprises a small amount of a low-molecular weight compound. When only a small amount of a low-molecular weight compound is comprised or no low-molecular weight compound is comprised, foaming in an end portion in low-temperature sticking can be further suppressed.

The low-molecular weight compound refers to a compound having a molecular weight of less than 1000, and examples thereof include the above plasticizer, and a reactive diluent to be cured by light irradiation. Examples of the reactive diluent include (meth)acrylic-based reactive diluents such as a (meth)acrylic-based monomer and a (meth)acrylic oligomer, epoxy-based reactive diluents such as an epoxy monomer and an epoxy oligomer, and silicone-based reactive diluents such as an alkoxysilane monomer and an alkoxysilane oligomer.

The content of the low-molecular weight compound in the pressure-sensitive adhesive film is, for example, less than 20 parts by mass based on 100 parts by mass of the thermoplastic resin comprised in the pressure-sensitive adhesive film, from the viewpoint of suppression of foaming in an end portion in low-temperature sticking. The content of the low-molecular weight compound is preferably 15 parts by mass or less, more preferably 10 parts by mass or less, further preferably 5 parts by mass or less, still further preferably 1 part by mass or less from the viewpoint of suppression of foaming in an end portion in low-temperature sticking. The lower limit of the content of the low-molecular weight compound is 0 parts by mass.

### [Method for producing polyvinyl acetal-based resin]

The polyvinyl acetal-based resin for use in the pressure-sensitive adhesive film of the present invention is obtained by acetalizing a polyvinyl alcohol (also referred to as "raw material polyvinyl alcohol") with an aldehyde, and then, if necessary, reacting the resultant with a modifying agent or subjecting the resultant to a re-acetylation treatment. The raw material polyvinyl alcohol may be an unmodified polyvinyl alcohol, or the raw material polyvinyl alcohol may be a modified polyvinyl alcohol in a case where the modified polyvinyl acetal resin is obtained.

For example, a modified polyvinyl acetal resin (A) having a polyalkylene oxide structure, when produced, is preferably produced by the following production method 1).

### (Production method (1))

In the present production method (1), first, a polyoxyalkylene-modified polyvinyl alcohol is produced as the raw material polyvinyl alcohol. Specifically, the polyoxyalkylene-modified polyvinyl alcohol is obtained by polymerizing a monomer comprising a vinyl ester and a vinyl monomer having a polyoxyalkylene group to obtain a polymer, and then saponifying the polymer. An alkali or an acid is generally used in saponification, and an alkali is preferably used. The polyoxyalkylene-modified polyvinyl alcohol may be used singly or in combinations of two or more kinds thereof.

Next, the polyoxyalkylene-modified polyvinyl alcohol obtained above may be acetalized with an aldehyde to obtain the modified polyvinyl acetal resin (A). The acetalization method here performed may be a known method.

The vinyl ester for use in the production method (1) can be, for example, vinyl acetate, vinyl formate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate, or vinyl benzoate. In particular, vinyl acetate is preferable.

Specific examples of the vinyl monomer having a polyoxyalkylene group, for use in the production method (1), include a compound represented by the following formula (4). In particular, a polyoxyalkylene vinyl ether represented by the following formula (4-1) and a polyoxyalkylene allyl ether represented by the following formula (4-2) are preferable. 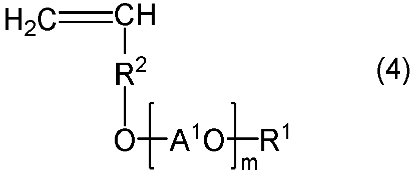 wherein A¹O, R¹, R², and m are the same as described above. 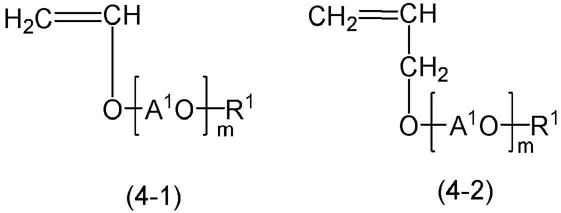 wherein A¹O, m, and R¹ are each the same as described above.

Preferred examples of the vinyl monomer having a polyoxyalkylene group include polyoxyethylene monovinyl ether, polyoxyethylene polyoxypropylene monovinyl ether, polyoxypropylene monovinyl ether, polyoxyethylene monoallyl ether, polyoxyethylene polyoxypropylene monoallyl ether, polyoxypropylene monoallyl ether, polyoxyethylene alkyl vinyl ether, polyoxyethylene polyoxypropylene alkyl vinyl ether, polyoxypropylene alkyl vinyl ether, polyoxyethylene alkyl allyl ether, polyoxyethylene polyoxypropylene alkyl allyl ether, and polyoxypropylene alkyl allyl ether.

The unmodified polyvinyl acetal resin is preferably produced by the following production method (2).

### (Production method (2))

In the present production method (2), the raw material polyvinyl alcohol is acetalized with an aldehyde to obtain a polyvinyl acetal-based resin (hereinafter, also referred to as "raw material polyvinyl acetal-based resin"). The raw material polyvinyl alcohol here used is an unmodified polyvinyl alcohol obtained by saponifying a polyvinyl ester. Next, the raw material polyvinyl acetal-based resin may be subjected to a re-acetylation treatment to obtain the unmodified polyvinyl acetal resin. The re-acetylation treatment may be performed by a conventionally known method, or may be performed with acetic anhydride in the presence of a base such as pyridine. The re-acetylation treatment may be performed by heating to, for example, about 50°C or more and 100°C or less, preferably about 70°C or more and 90°C or less. When the polyvinyl acetal-based resin is subjected to the re-acetylation treatment, the polyvinyl acetal-based resin is decreased in amount of a hydroxyl group, easily decreased in maximum peak temperature of tanδ and improved in adhesiveness to a resin material such as a polarization film.

The modified polyvinyl acetal resin, which has an alkyl group as a modified group in a side chain, may be produced by the following production method.

First, the raw material polyvinyl alcohol is acetalized with an aldehyde to obtain a polyvinyl acetal-based resin (hereinafter, also referred to as "raw material polyvinyl acetal-based resin"). The raw material polyvinyl alcohol here used is obtained by saponifying a polyvinyl ester, and is preferably an unmodified polyvinyl alcohol.

Next, the raw material polyvinyl acetal-based resin is reacted with a modifying agent having an alkyl group to introduce the alkyl group to the raw material polyvinyl acetal-based resin. The modifying agent may be a compound having a reactive group which is to be reacted with a hydroxyl group contained in the raw material polyvinyl acetal-based resin to form a urethane bond or an ester bond. Specific examples include an alkyl isocyanate whose alkyl group has 2 to 30 carbon atoms, such as n-octadecyl isocyanate. Examples also include a carboxylic acid having 3 to 31 carbon atoms, or an anhydride of the carboxylic acid, and carboxylic acid derivatives such as carboxylic acid ester and carboxylic acid halide. Such a carboxylic acid derivative is preferably carboxylic acid chloride such as 2-ethylhexanoyl chloride, lauroyl chloride, myristyl chloride, palmitoyl chloride, or stearoyl chloride.

The pressure-sensitive adhesive film of the present invention widely refers to not only one as a single pressure-sensitive adhesive film, but also one which is laminated or applied on other member and thus is in the form of a layer or film, and one having a relatively large thickness, generally called sheet, is also referred to as "pressure-sensitive adhesive film".

The pressure-sensitive adhesive film of the present invention may be composed of a single layer. The layer constituting such a single-layer film may have a composition as described with respect to the pressure-sensitive adhesive film. In other words, the layer constituting such a single-layer film may comprise a thermoplastic resin and comprise no plasticizer, or may comprise a plasticizer at any content as described above. An additive may be further appropriately compounded as described above.

The pressure-sensitive adhesive film of the present invention may be a multi-layer film of two or more layers. The multi-layer film may have a composition as described with respect to the pressure-sensitive adhesive film, as the composition of the entire film, and each layer (hereinafter, also referred to as " first layer") may have a composition as described with respect to the pressure-sensitive adhesive film. In other words, each first layer may comprise a thermoplastic resin and comprises no plasticizer or may comprise a plasticizer at any content as described above, as described with respect to the pressure-sensitive adhesive film. Furthermore, an additive may also be appropriately compounded as described above. The details of the thermoplastic resin, the plasticizer, and the additive, and the detail of the content of such each component, in each first layer of the multi-layer film are as described with respect to the pressure-sensitive adhesive film. Herein, the thermoplastic resin serving as the reference of the content is the thermoplastic resin comprised in each first layer. Each first layer in the multi-layer film may be the same in composition or may be different in composition.

The multi-layer film may also be a laminate of the above first layer and a layer other than the first layer (hereinafter, also referred to as "second layer"). Specific examples include a three-layer structure of first layer/second layer/first layer.

In a case where the pressure-sensitive adhesive film of the present invention is a multi-layer film of two or more layers, each layer preferably has a composition described with respect to the pressure-sensitive adhesive film.

### [Method for producing pressure-sensitive adhesive film]

The pressure-sensitive adhesive film of the present invention can be produced by forming a resin composition comprising a thermoplastic resin such as a polyvinyl acetal-based resin, into a film, by a known method. The resin composition comprises at least a thermoplastic resin such as a polyvinyl acetal-based resin, produced as described above, and may be prepared by adding, if necessary, a plasticizer, an additive, and/or the like. The resin composition may be appropriately diluted with a solvent and then used.

More specifically, the pressure-sensitive adhesive film, which is of a single layer, may be formed as a film by applying or casting the resin composition to a support such as a release sheet, and, if necessary, appropriately heating and drying the resultant, or may be formed as a film by subjecting the resin composition to extrusion, press forming, or the like.

In a case where the polyvinyl acetal-based resin is obtained by reacting a raw material polyvinyl acetal-based resin with a modifying agent, as described above, forming may also be made as follows. In other words, a film may also be formed by applying or casting a composition comprising the raw material polyvinyl acetal-based resin, the modifying agent, and, if necessary, other additive such as a plasticizer to be compounded, onto a support such as a release sheet, and thereafter heating the resultant to react the modifying agent with the raw material polyvinyl acetal-based resin.

In a case where the pressure-sensitive adhesive film is a multi-layer film, a resin composition constituting each layer may be provided, and the resin composition constituting each layer may be used to obtain each layer of the multi-layer film. Such a multi-layer structure may be obtained by appropriately stacking such each layer, or may be formed by coextrusion or the like.

The pressure-sensitive adhesive film of the present invention is not particularly limited, can be used in various applications, and is preferably used in various display applications, laminated glass applications, and the like. The display is not particularly limited, and is preferably an in-car display. The display may be a liquid crystal display or may be an organic EL display or the like, and is preferably a liquid crystal display.

Laminated glass is used in window glass for various conveyances, for example, vehicles such as automobiles and railways, marine vessels, and airplanes, various buildings and plants such as buildings, condominiums, detached houses, halls, and gymnasiums, or working machines for cutting, or polishing, and construction machines such as shovels, and cranes, and in particular, is preferably used in applications of vehicles such as automobiles. The pressure-sensitive adhesive film of the present invention is favorable in transparency, causes less foaming in an end portion thereof, and is also favorable in adhesiveness to a resin material such as a polarization film and a light control film, and thus is suitably used in various displays or laminated glass comprising a light control film.

Herein, laminated glass and a display, to which the pressure-sensitive adhesive film of the present invention is applied, may comprise a laminate described below.

### <Laminate>

The pressure-sensitive adhesive film of the present invention is preferably used together with a base material such as an organic material substrate and/or an inorganic material substrate, and used as one portion of a laminate, but not particularly limited thereto. The laminate of the present invention may specifically comprise the pressure-sensitive adhesive film, and at least any of an inorganic material substrate and an organic material substrate. The pressure-sensitive adhesive film is preferably placed so as to adhere to at least any of an inorganic material substrate and an organic material substrate, and is more preferably placed on a location adhering to an organic material substrate. The pressure-sensitive adhesive film has a high adhesive force to various resin materials, and thus can be placed on a location adhering to an organic material substrate and thus adhere to the base material at a high adhesive force.

Examples of the organic material substrate include an organic resin plate and a resin film. The organic resin plate is also called organic glass plate. The organic resin plate is not particularly limited, and examples include various organic plates, for example, a polycarbonate plate, a (meth)acrylic plate such as a polymethyl methacrylate plate, an acrylonitrile-styrene copolymer plate, an acrylonitrile-butadiene-styrene copolymer plate, a polyester plate such as a polyethylene terephthalate plate, a fluororesin plate, a polyvinyl chloride plate, a chlorinated polyvinyl chloride plate, a polypropylene plate, a polystyrene plate, a polysulfone plate, an epoxy resin plate, a phenol resin plate, an unsaturated polyester resin plate, and a polyimide resin plate. The organic resin plate may be appropriately surface-treated.

In particular, a polycarbonate plate is preferable because of being excellent in transparency and impact resistance, a (meth)acrylic plate is preferable because of being high in transparency and excellent in weather resistance and mechanical strength, and in particular, a polycarbonate plate is more preferable.

The thickness of the organic resin plate is not particularly limited, and is preferably 0.1 mm or more, further preferably 0.4 mm or more, and preferably 5.0 mm or less, further preferably 3.0 mm or less.

The resin film is not particularly limited, and examples thereof include (meth)acrylic resin films, polyester resins film such as a polycarbonate film, a polyethylene terephthalate (PET) film and a polyethylene naphthalate (PEN) film, polyolefin resin films such as a polyethylene film and a polypropylene film, cyclic polyolefin (COP) films, a triacetylcellulose (TAC) film, a polyethersulfone (PES) resin film, and polyimide resin films. A surface layer being composed of a hard coating layer or the like including a (meth)acrylic resin may also be provided on a surface of the resin film.

The thickness of the resin film is not particularly limited, and is preferably 30 µm or more, further preferably 50 µm or more, and preferably 500 µm or less, further preferably 450 µm or less.

One having a relatively large thickness, having low flexibility, and being not generally foldable is generally called organic resin plate, whereas one having a relatively small thickness and being generally foldable is generally called resin film, and these are not clearly distinguished.

Examples of the inorganic material substrate include an inorganic glass plate. The inorganic glass plate is not particularly limited, and examples thereof include various glass plates such as float plate glass, reinforced glass, colored glass, polished plate glass, figured glass, meshed plate glass, wired plate glass, ultraviolet absorption plate glass, infrared reflection plate glass, infrared absorption plate glass, and green glass. Such inorganic glass may also be, for example, surface-treated. The thickness of the inorganic glass is not particularly limited, and is preferably 0.1 mm or more, further preferably 1.0 mm or more, and preferably 5.0 mm or less, further preferably 3.0 mm or less.

The organic material substrate or the inorganic material substrate may be appropriately provided with an electrode, a sensor, and/or the like. The electrode is constituted by a conductive layer laminated on each of the base materials.

Examples of the sensor include a touch sensor. The touch sensor is a sensor which senses touch input by approach or contact of a finger, a touch pen, or other object to or with each of the base materials, and is constituted by a conductive layer laminated on each of the base materials. The touch sensor senses touch input by an electrical change generated as an electrical change in electrostatic capacity, current, voltage, or the like on the conductive layer due to approach or contact of a finger, a touch pen, or other object to or with each of the base materials.

The conductive layer is not particularly limited, a conventionally known electrode material having transparency can be used without any particular limitation, and examples thereof include an indium tin oxide (ITO) conductive film, a tin oxide conductive film, a zinc oxide conductive film, and a polymeric conductive film.

In particular, the inorganic material substrate is preferably selected from the group consisting of an inorganic glass plate and an inorganic glass plate provided with at least any of an electrode or a sensor. The organic material substrate is preferably at least one selected from the group consisting of a polycarbonate plate, a (meth)acrylic plate, a PET film, a COP film, a polycarbonate film, and such a film provided with at least any of an electrode or a sensor.

The above-mentioned hard coating layer may be formed on a surface of the organic material substrate (in particular, film) where a conductive layer such as an electrode or a sensor is laminated, the surface being opposite to a surface of the base material, on which the conductive layer is provided. The surface of the base material, on which the conductive layer is provided, usually serves as an adhesive surface to the pressure-sensitive adhesive film, and the pressure-sensitive adhesive film of the present invention can also have a high adhesive force to a surface on which the hard coating layer is provided.

The laminate preferably comprises paired base materials selected from the group consisting of the inorganic material substrate and the organic material substrate, and an adhesive film placed between the paired base materials and thus has a multi-layer structure of three or more layers, but not particularly limited thereto.

The adhesive film in such a multi-layer structure may, for example, adhere to both the paired base materials and thus allow the paired base materials to be bonded with the adhesive film being interposed. In this case, the adhesive film may be the above-mentioned pressure-sensitive adhesive film of the present invention.

The laminate may have a structure where still another interlayer member is placed between the paired base materials, and such a structure may have a multi-layer structure of five or more layers where the adhesive film is placed between each of the base materials and such an interlayer member. The adhesive film may adhere to each of the base materials and such an interlayer member, and thus each of the base materials and such an interlayer member may be bonded with the adhesive film being interposed. The adhesive film between each of the base materials and such an interlayer member in the above-described multi-layer structure of five or more layers is a resin film, at least one thereof may be the pressure-sensitive adhesive film of the present invention, and both thereof is preferably each the pressure-sensitive adhesive film of the present invention.

The interlayer member may comprise at least any of the inorganic material substrate and the organic material substrate, and at least any of the inorganic material substrate and the organic material substrate may be placed on a location where the pressure-sensitive adhesive film of the present invention adheres.

The above-described laminate may constitute a display, laminated glass, or the like, but not limited thereto. The interlayer member may be a touch panel, a light control element, or the like, as described below, but not limited thereto. The inorganic material substrate or the organic material substrate may constitute one portion of a display element or the like constituting a touch panel, a light control element, or a display.

The laminate of the present invention can be produced by, for example, providing the adhesive film, and compression bonding each member with the provided adhesive film being interposed. For example, the laminate can be produced by stacking the base material, the adhesive film and the base material in the listed order, and compression bonding them. In a case where the interlayer member is provided, the laminate can be produced by stacking the base material, the adhesive film, the interlayer member, the adhesive film, and the base material in the listed order, and compression bonding them.

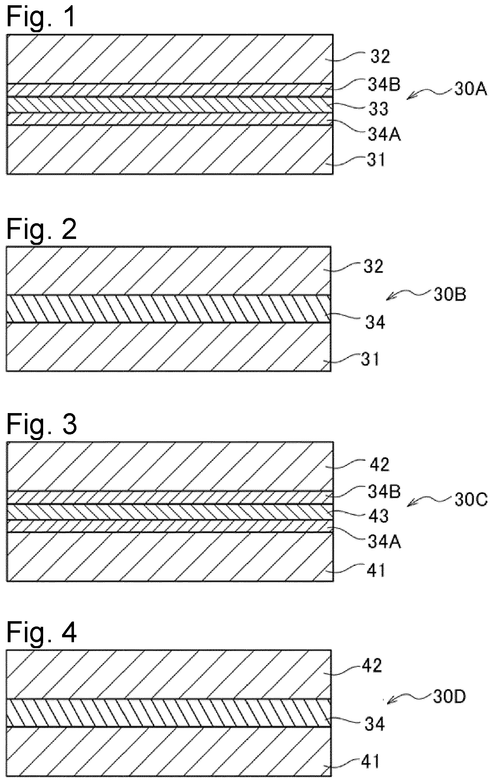

Next, specific examples of the laminate are described with reference to the drawings. Fig. 1 illustrates a laminate according to a first embodiment. In the first embodiment, a laminate 30A is applied to a touch panel-attached display. The touch panel-attached display is preferably an in-car display. The laminate 30A according to the present embodiment comprises a display element 31, a surface protection panel 32, and a touch panel 33 placed between the display element 31 and the surface protection panel 32, and adhesive films 34A and 34B are placed respectively between the touch panel 33 and the display element 31 and between the surface protection panel 32 and the touch panel 33.

The surface protection panel 32 is preferably any of an organic resin plate or an inorganic glass plate, and is preferably an inorganic glass plate.

Examples of the display element 31 include an organic EL display element and a liquid crystal display element. The display element 31 is preferably provided with a polarization plate (polarization film) on the outermost surface at the front surface side thereof. The outermost surface at the front surface side is the outermost surface at the surface protection panel side, and an opposite side thereof is also referred to as rear surface side.

The polarization plate (polarization film) generally has a configuration where a protective film is provided on each of both surfaces of a light polarizer such as a polyvinyl alcohol resin film. The protective film is constituted from the above-mentioned resin film, and is preferably any of a PET film, a COP film, or a TAC film. Accordingly, an organic material substrate is generally placed on the outermost surface of the display element 31, located at the front surface side.

The display element 31, even when provided with no polarization plate (polarization film) on a surface thereof located at the front surface side, may be provided with a protective film on the outermost surface thereof located at the front surface side, and therefore, even in such a case, the most front surface of the display element 31, located at the front surface side, is constituted by an organic material substrate.

The touch panel 33 may be constituted by any of inorganic glass, an organic resin plate or a resin film to which a touch sensor is attached, and inorganic glass or a resin film to which a touch sensor is attached is preferable.

Two or more of the inorganic glass, the organic resin plate or the resin film may be laminated in the touch panel 33 to provide a multi-layer structure body. Also in such a case, a touch sensor may be attached to any of the inorganic glass, the organic resin plate or the resin film in the touch panel 33.

A protective film being composed of a resin film may be placed on any of the most front surface at the front surface side or on the most front surface at the rear surface side in the touch panel 33. Accordingly, each adhesive surface of the touch panel 33, to the adhesive films 34A and 34B, is any of the inorganic glass, the organic glass and the resin film.

The adhesive films 34A and 34B respectively adhere to the display element 31 and the touch panel 33, and to the touch panel 33 and the surface protection panel 32, thereby bonding them. Any one of the adhesive films 34A and 34B may be the pressure-sensitive adhesive film of the present invention, and both thereof are each preferably the pressure-sensitive adhesive film of the present invention.

The pressure-sensitive adhesive film of the present invention has a high adhesive force to not only an inorganic material substrate, but also various resin materials (namely, organic material substrate). Accordingly, adhesive surfaces of the display element 33, the surface protection panel 32, and the touch panel 33, to the adhesive films 34A and 34B, may be each constituted by the organic material substrate, and even in such a case, the display element 31 and the touch panel 33, and the surface protection panel 32 and the touch panel 33 can be each bonded at a high adhesive force.

Low-temperature sticking can be made, and thus sticking can be made without thermal degradation of constituent members of the touch panel 33 and the display element 31.

Fig. 2 illustrates a laminate according to a second embodiment. The laminate according to the second embodiment is also applied to a display, and a touch panel 33 is omitted in a laminate 30B and thus the laminate 30B comprises a display element 31, a surface protection panel 32, and an adhesive film 34 placed therebetween.

The details of the display element 31 and the surface protection panel 32 are as described in the first embodiment.

In the present embodiment, the adhesive film 34 is composed of the pressure-sensitive adhesive film of the present invention. The adhesive film 34 (pressure-sensitive adhesive film) adheres to the display element 31 and the surface protection panel 32, thereby bonding them, and therefore, the display element 31 and the surface protection panel 32 are bonded at a high adhesive force and low-temperature sticking can allow for sticking without thermal degradation of any constituent member of the display element 31, as in the first embodiment.

In the second embodiment, the surface protection panel 32 may be a OGS (one glass solution) panel, and the surface protection panel 32 may be provided with a sensor such as a touch sensor. Accordingly, the surface protection panel 32 may be constituted by inorganic glass or the like to which a sensor is attached.

Fig. 3 illustrates a laminate according to a third embodiment. A laminate 30C according to the third embodiment is applied to laminated glass having a light control function. The laminate 30C according to the present embodiment comprises paired laminated glass members (base materials) 41 and 42, and a light control element 43 placed between the paired laminated glass members 41 and 42, and adhesive films 34A and 34B are placed respectively between one laminated glass member 41 and the light control element 43, and between other laminated glass member 42 and the light control element 43.

The laminated glass members 41 and 42 may be each any of an inorganic glass plate and an organic resin plate, and the details thereof are as described above.

The light control element 43 is preferably a light control film comprising two resin films and a light control layer placed between the two resin films. Accordingly, an adhesive surface of the light control element 43, to each of the adhesive films 34A and 34B, is a resin material.

Examples of such a resin film comprised in the light control element 43 include polyester resin films such as a PET film and a PEN film, (meth)acrylic resin films, TAC films, PES resin films, and polyimide resin films. In particular, a polyester resin film is preferable and in particular a PET film is more preferable, from the viewpoint of handleability or the like.

A conductive layer constituting an electrode is provided on each of surfaces of the two resin films, located at the light control layer side.

The light control layer is changed in visible light transmittance by switching between application and no application of a voltage between such conductive layers provided on the two resin films. The light control layer may be constituted by a liquid crystal layer of a polymer-dispersed liquid crystal (PDLC) or the like. The light control film may be a SPD (Suspended Particle Device) film, an electrochromic film, an electrophoretic film device, or the like. Accordingly, the light control layer may be a SPD layer comprising a resin matrix and a light adjustment suspension dispersed in the resin matrix, or may be an electrochromic material layer. The light control layer may also be an electrophoretic layer or the like comprising an electrophoretic particle and a dispersant for dispersing the electrophoretic particle.

Also in the present embodiment, the adhesive films 34A and 34B adhere respectively to the laminated glass member 41 and the light control element 43, and to the laminated glass member 42 and the light control element 43, thereby bonding them. The adhesive films 34A and 34B are resin films, any one of the films may be the pressure-sensitive adhesive film of the present invention, and both the films are each preferably the pressure-sensitive adhesive film of the present invention.

The pressure-sensitive adhesive film of the present invention has a high adhesive force to not only an inorganic material substrate, but also various resin materials, and thus can allow the laminated glass members 41 and 42 and the polarization element 43 to be bonded at a high adhesive force.

Low-temperature sticking can allow for sticking without thermal degradation of constituent members and the like of polarization element 43.

Fig. 4 illustrates a laminate according to a fourth embodiment. A laminate 30D according to the present embodiment is applied to laminated glass. The laminate 30D according to the present embodiment comprises paired laminated glass members 41 and 42, and an adhesive film 34 placed between the paired laminated glass members 41 and 42, and the adhesive film 34 may be composed of the pressure-sensitive adhesive film of the present invention described above.

The paired laminated glass members 41 and 42 are as described in the third embodiment. The adhesive film 34 (pressure-sensitive adhesive film) can adhere to both the laminated glass members 41 and 42, thereby bonding them, and thus the laminated glass members 41 and 42 can be bonded at a high adhesive force.

While an example where the adhesive film is a pressure-sensitive adhesive film of a single layer is supposed and described in the above first to fourth embodiments, the adhesive film to be used may be a multi-layer film. The configuration of the multi-layer film is as described above.

### Examples

The present invention is described in more detail with reference to Examples, but the present invention is not limited by these Examples at all. The measurement method and the evaluation method of each value of physical properties in the present invention are as described below.

### <Weight-average molecular weight (Mw)>

A pressure-sensitive adhesive film was dissolved in tetrahydrofuran at a concentration of 0.05% by weight and the solution was filtered with a syringe filter (manufactured by Merck, Millex-LH 0.45 µm), and thereafter the molecular weight was measured with gel permeation chromatography (manufactured by Waters Corporation, e2690). The weight-average molecular weight (Mw) was calculated by use of a molecular weight calibration curve created with a monodisperse polystyrene standard sample. The column used was Shodex GPC KF-806L (manufactured by Showa Denko K.K.), and the eluent used was tetrahydrofuran.

### <Shear storage elastic modulus and maximum peak temperature of tanδ>

Each of the pressure-sensitive adhesive films obtained in Examples and Comparative Examples was cut out to a length of 10 mm and a width of 5 mm, and viscoelasticity was measured with a dynamic viscoelasticity measurement apparatus (manufactured by IT Keisoku Seigyo, Co., Ltd., trade name "DVA-200") in the following measurement conditions, thereby detecting the shear storage elastic modulus (G') at 85°C.

The peak temperature of the loss tangent tanδ obtained from the result of viscoelasticity measurement was read. The peak temperature at the maximum value of tanδ, among peak temperatures in a temperature region of -50 to 150°C, was defined as the maximum peak temperature of tanδ.

### (Measurement conditions)

Deformation manner: shear mode, measurement temperature: -50°C to 200°C, rate of temperature rise: 5°C/min, measurement frequency: 1 Hz, strain: 1%

### <Amount of modification, degree of acetalization, degree of acetylation, and amount of hydroxyl group>

These were determined by dissolution of a polyvinyl acetal-based resin in a chloroform-d, measurement with 1H-NMR (nuclear resonance spectrum), and analysis of the molar ratio of each unit.

### <Amount of change and rate of change in thickness of test sample A in compression creep test>

The amount of change in thickness of a test sample A in a compression creep test performed by use of each of the pressure-sensitive adhesive films of Examples and Comparative Examples according to the method described herein was measured. The rate of change in thickness of the test sample A was calculated as the value obtained by dividing the amount of change in thickness of the test sample A by the thickness of the test sample A before the compression creep test performed.

### <Foaming in end portion of laminated glass>

Two glass plates (clear float glass) of 10 cm length × 10 cm width × 2.5 mm thickness were provided. Each of the pressure-sensitive adhesive films obtained was sandwiched between these two glass plates, thereby obtaining a laminate. The laminate obtained was placed in a rubber bag, and degassed at a degree of vacuum of 2660 Pa (20 torr) for 20 minutes. Next, the laminate was heated to 90°C at a rate of temperature rise of 4°C/min with being degassed, and retained at 90°C for 5 minutes and then cooled to 30°C. Next, the pressure was returned to ordinary pressure. Thus, laminated glass was obtained.

The laminated glass obtained was left to still stand on a blackout curtain, an end portion of the laminated glass was visually observed, and the proportion of foaming was rated on a 5-point scale of Levels 1 to 5. Level 1 means no observation of any foaming, and rating closer to Level 5 means more observation of a foamed portion.

### (Evaluation criteria)

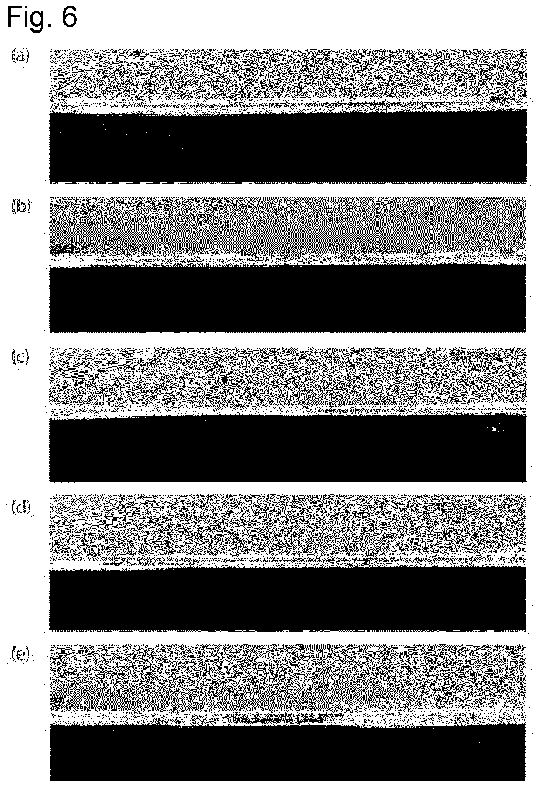

1: no observation of foaming in the end portion at all, as illustrated in Fig. 6(a).
2: level where small foaming is slightly observed in a portion of the end portion, as illustrated in Fig. 6(b).
3: level where small foaming is observed partially in multiple portions of the end portion, as illustrated in Fig. 6(c).
4: level where small foaming is observed entirely in the end portion, as illustrated in Fig. 6(d).
5: level where foaming is observed heavily in the end portion, as illustrated in Fig. 6(e).

In a case where the evaluation result of foaming in the end portion of the laminated glass is any of Levels 1 to 3, main compression bonding under conditions of 90°C and 0.5 MPa in an autoclave in the subsequent process allows foaming in the end portion of the laminated glass to disappear.

### transparency of laminated glass>

Two glass plates (clear float glass) of 30 cm length × 30 cm width × 2.5 mm thickness were provided. Each of the interlayerinterlayer films obtained was sandwiched between these two glass plates, thereby obtaining a laminate. The laminate obtained was placed in a rubber bag, and degassed at a degree of vacuum of 2660 Pa (20 torr) for 20 minutes. Next, the laminate was heated to 95°C at a rate of temperature rise of 6°C/min with being degassed, and retained at 95°C for 20 minutes and then cooled to 30°C. Next, the pressure was returned to ordinary pressure. Thus, laminated glass was obtained.

The laminated glass obtained was left to still stand on a blackout curtain, transparency of the laminated glass was visually observed, and the level of transparency was rated on a 5-point scale of Levels 1 to 5. Level 1 means that the entire surface is completely transparent, and rating closer to Level 5 means observation of a portion lower in transparency.

### (Evaluation criteria)

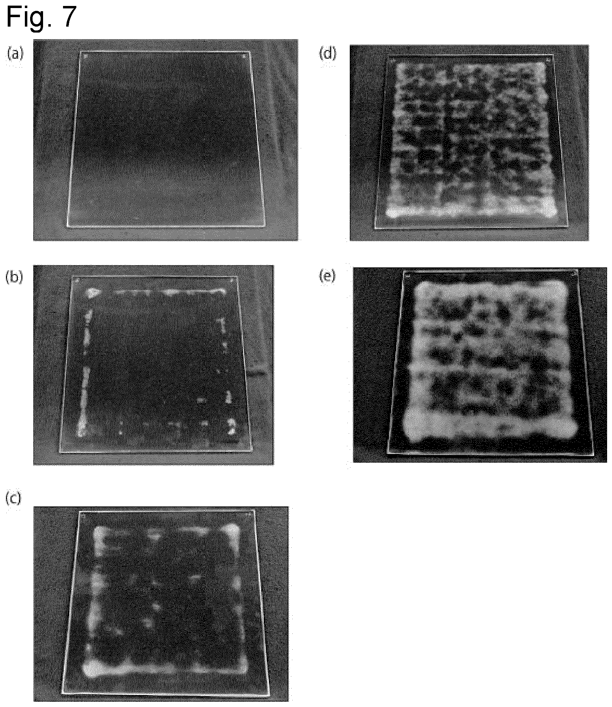

1: the entire surface is completely transparent, as illustrated in Fig. 7(a).
2: a portion low in transparency is present near the periphery, but the inside thereof is completely transparent, as illustrated in Fig. 7(b).
3: a portion low in transparency is present near the periphery and the inside thereof is also partially opaque, as illustrated in Fig. 7(c), but opaqueness of the inside has no problem.
4: the entire surface is almost opaque, but a transparent portion slightly remains inside the periphery, as illustrated in Fig. 7(d).
5: the entire surface is opaque, as illustrated in Fig. 7(e).

In a case where the evaluation result of transparency of the laminated glass is any of Levels 1 to 4, main compression bonding under conditions of 90°C and 0.5 MPa in an autoclave in the subsequent process allows the laminated glass to have sufficient transparency.

### <Adhesive force to polycarbonate base material (PC)>

The adhesive force to a polycarbonate base material was measured by use of each of the pressure-sensitive adhesive films of Examples and Comparative Examples, according to the method described herein, and was evaluated based on the following criteria.

### (Evaluation criteria)

AA: the maximum load is 200 N or more.
A: the maximum load is 100 N or more and less than 200 N.
B: the maximum load is less than 100 N.

### <Adhesive force to TAC polarization plate >

Each of the pressure-sensitive adhesive films, having a size of a length of 10 mm and a width of 10 mm, a polarization plate film made of TAC, having a length of 25 mm and a width of 100 mm, manufactured by Sumitomo Chemical Co., Ltd., and float glass having a length of 25 mm and a width of 100 mm were provided. The polarization plate film made of TAC was one where a TAC film was laminated on each of both surfaces of a PVA film.

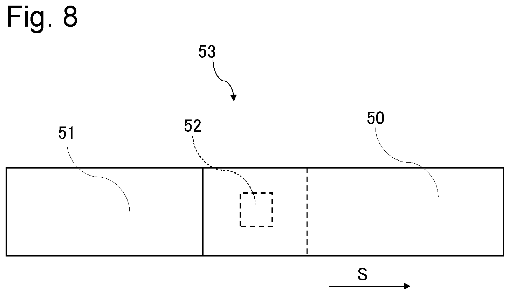

As illustrated in Fig. 8, a polarization plate film 50 made of TAC and float glass 51 were placed so that the longitudinal directions thereof were in parallel with each other, and these were stacked with a pressure-sensitive adhesive film 52 being interposed.

Thereafter, temporary compression bonding was performed under conditions of 90°C and 0.1 MPa for 3 minutes in a vacuum laminator by use of a spacer having the same thickness as that of the pressure-sensitive adhesive film 52 so that the thickness of the pressure-sensitive adhesive film 52 was constant. Next, furthermore main compression bonding was performed under conditions of 90°C and 0.5 MPa for one hour, thereby obtaining a laminate 53.

The laminate 53 obtained was subjected to a shear adhesion test. Specifically, the polarization plate film 50 was pulled in a shear direction S along with the longitudinal direction at a rate of 200 mm/min with respect to the float glass 51 under an environment at a temperature of 23°C, the maximum load (N) at which the polarization film 50 was released was measured, and the maximum load (N) was defined as the adhesive force and evaluated by the following evaluation criteria.
AA: the maximum load is 220 N or more.
A: the maximum load is 150 N or more and less than 220 N.
B: the maximum load is less than 150 N.

### <Adhesive force to ITO-PET>

The adhesive force was evaluated in the same manner as the evaluation of the adhesive force to the polarization plate film made of TAC except that a polyethylene terephthalate film (ITO-PET, manufactured by Sekisui Nano Coat Technology) where one surface was coated with ITO and a surface opposite thereto was subjected to a hard coat treatment was used instead of the polarization plate film made of TAC. Here, a hard coat surface opposite to the surface coated with ITO was set to a surface to which each of the pressure-sensitive adhesive films was to be attached.

### (Example 1)

### [Synthesis of ethylene oxide-modified polyvinyl alcohol]

An allyl ether monomer (1) described in Table 1 was provided. The allyl ether monomer (1) was a compound represented by formula (4-2), A¹O contained an oxyethylene group (EO) and an oxypropylene group (PO) in a mixed manner and had a random structure of these groups, and the molar ratio, the average number of repeating of each of EO and PO, and the terminal group (R¹) were as shown in Table 1.

515 parts by mass of vinyl acetate, 151 parts by mass of the allyl ether monomer (1), and 333 parts by mass of methanol were added into a flask equipped with a stirrer, a thermometer, a dripping funnel and a reflux condenser, the system was purged with nitrogen, and thereafter the temperature was raised to 60°C. 1.3 parts by mass of 2,2-azobisisobutyronitrile was added to the system and polymerization was initiated. The polymerization was stopped after 5 hours from initiation of the polymerization. After the unreacted monomer and methanol were removed by heating in an oven, a 40% by mass copolymer solution in methanol was prepared.

7.4 parts by mass of a 3% by mass NaOH solution in methanol was added with stirring of 100 parts by mass of the resulting copolymer solution in methanol at 40°C, and the resultant was well mixed and then left to still stand. After 2 hours, the solidified polymer was pulverized by a pulverizer, washed with methanol and then dried, thereby obtaining a polymer powder (ethylene oxide-modified polyvinyl alcohol).

### [Preparation of polyvinyl butyral (PVB 1)]

280 g of the polymer powder obtained was added to 2100 g of pure water, and stirred at a temperature of 90°C for about 2 hours and thus dissolved. The solution was cooled to 40°C, 160 parts by mass of hydrochloric acid having a concentration of 35% by mass and 150 parts by mass of n-butylaldehyde were added thereto, the liquid temperature was decreased to 20°C, the temperature was retained to perform acetalization reaction, and a reaction product was precipitated. Thereafter, the liquid temperature was set to 40°C and retained for 3 hours to complete the reaction, and the resultant was neutralized, washed with water and dried by ordinary methods, thereby obtaining a white powder of a polyvinyl acetal-based resin (PVB 1).

### [Production of pressure-sensitive adhesive film]

The polyvinyl acetal-based resin (PVB 1) obtained was subjected to press forming at a temperature of 160°C and a pressure of 20 MPa, thereby obtaining a pressure-sensitive adhesive film having a thickness of 780 µm. The amount of change in thickness, the rate of change in thickness, the maximum peak temperature of tanδ, and the shear storage elastic modulus (G') of the test sample A in the compression creep test performed with respect to the pressure-sensitive adhesive film obtained were measured. In addition, foaming in an end portion of laminated glass, transparency of the laminated glass, the adhesive force thereof to a polycarbonate base material, the adhesive force thereof to a TAC polarization plate, and the adhesive force thereof to ITO-PET were evaluated.

### (Example 2)

PVB 2 was obtained in the same manner as in Example 1 except that the allyl ether monomer used was changed to an allyl ether monomer (2), the amounts of vinyl acetate, the allyl ether monomer (2), methanol, and 2,2-azobisisobutyronitrile were respectively changed to 723 parts by mass, 257 parts by mass, 20 parts by mass, and 1 part by mass, and the polymerization temperature was changed to 62°C. PVB 2 was used to produce a pressure-sensitive adhesive film in the same manner as in Example 1. Physical properties of the pressure-sensitive adhesive film obtained were measured or evaluated in the same manner as in Example 1.

The allyl ether monomer (2) was a compound represented by formula (4-2), A¹O represented an oxypropylene group (PO), and the average number of repeating and the terminal group (R¹) were as shown in Table 1.

### (Example 3)

PVB 3 was obtained in the same manner as in Example 1 except that the amounts of vinyl acetate, the allyl ether monomer (1), methanol, and 2,2-azobisisobutyronitrile were respectively changed to 552 parts by mass, 162 parts by mass, 286 parts by mass, and 1.4 parts by mass, and PVB 3 was used to produce a pressure-sensitive adhesive film in the same manner as in Example 1. Physical properties of the pressure-sensitive adhesive film obtained were measured or evaluated in the same manner as in Example 1.

### (Example 4)

PVB 4 was obtained in the same manner as in Example 1 except that the amounts of vinyl acetate, the allyl ether monomer (1), methanol, and 2,2-azobisisobutyronitrile were respectively changed to 572 parts by mass, 143 parts by mass, 286 parts by mass, and 0.7 parts by mass, and PVB 4 was used to produce a pressure-sensitive adhesive film in the same manner as in Example 1. The pressure-sensitive adhesive film obtained was evaluated in the same manner as in Example 1.

### (Example 5)

PVB 5 was obtained in the same manner as in Example 1 except that the allyl ether monomer used was changed to an allyl ether monomer (3) and the amounts of vinyl acetate, the allyl ether monomer (3), methanol, and 2,2-azobisisobutyronitrile were respectively changed to 751 parts by mass, 230 parts by mass, 20 parts by mass, and 1 part by mass. PVB 5 was used to produce a pressure-sensitive adhesive film in the same manner as in Example 1. The pressure-sensitive adhesive film obtained was evaluated in the same manner as in Example 1.

The allyl ether monomer (3) was a compound represented by formula (4-2), A¹O contained an oxyethylene group (PO) and an oxypropylene group (PO) in a mixed manner, and the average number of repeating of each of these groups and the terminal group (R¹) were as shown in Table 1.

### (Example 6)

PVB 6 was obtained in the same manner as in Example 1 except that the allyl ether monomer used was changed to an allyl ether monomer (4), the amounts of vinyl acetate, the allyl ether monomer (4), methanol, and 2,2-azobisisobutyronitrile were respectively changed to 834 parts by mass, 147 parts by mass, 20 parts by mass, and 0.5 parts by mass, and the polymerization temperature was changed to 52°C. A resin composition was obtained by mixing 100 parts by mass of PVB 6 with 15 parts by mass of a plasticizer (3GO), and the resin composition obtained was used and subjected to press forming by the same method as in Example 1, thereby obtaining a pressure-sensitive adhesive film. The pressure-sensitive adhesive film obtained was evaluated in the same manner as in Example 1.

The allyl ether monomer (4) was a compound represented by formula (4-2), A¹O represented an oxyethylene group (EO), and the average number of repeating and the terminal group (R¹) were as shown in Table 1.

### (Example 7)

PVB 9 was obtained in the same manner as in Example 6 except that the amount of the allyl ether monomer (4) used was changed to 85 parts by mass. The plasticizer used was 14 parts by mass of polyoxypropylene diglyceryl ether having a number-average molecular weight of 700 (UNII,UBE DGP-700, manufactured by NOF Corporation, hereinafter, sometimes referred to as "DGP700"), based on 100 parts by mass of PVB 9. A resin composition was obtained by the same method as in Example 6, except for the above, and the resin composition obtained was used and subjected to press forming by the same method as in Example 1, thereby obtaining a pressure-sensitive adhesive film. The pressure-sensitive adhesive film obtained was evaluated in the same manner as in Example 1.

### (Example 8)

The plasticizer used was 14 parts by mass of polypropylene glycol having a number-average molecular weight of 1000 (PPG1000, manufactured by Fujifilm Wako Pure Chemical Corporation, hereinafter, sometimes referred to as "PPG1000"), based on 100 parts by mass of PVB 9. A resin composition was obtained by the same method as in Example 6, except for the above, and the resin composition obtained was used and subjected to press forming by the same method as in Example 1, thereby obtaining a pressure-sensitive adhesive film. The pressure-sensitive adhesive film obtained was evaluated in the same manner as in Example 1.

### (Example 9)

The plasticizer used was 14 parts by mass of polyoxypropylene glyceryl ether having a number-average molecular weight of 1000 (Uniol TG-1000R, manufactured by NOF Corporation, hereinafter, sometimes referred to as "TG1000R"), based on 100 parts by mass of PVB 9. A resin composition was obtained by the same method as in Example 6, except for the above, and the resin composition obtained was used and subjected to press forming by the same method as in Example 1, thereby obtaining a pressure-sensitive adhesive film. The pressure-sensitive adhesive film obtained was evaluated in the same manner as in Example 1.

### (Comparative Example 1)

A resin composition was obtained by using PVB 7 being unmodified polyvinyl butyral, as the polyvinyl acetal-based resin used, and mixing 40 parts by mass of a plasticizer (3GO) with 100 parts by mass of PVB 7, and the resin composition obtained was used and subjected to press forming by the same method as in Example 1, thereby obtaining a pressure-sensitive adhesive film. The pressure-sensitive adhesive film obtained was evaluated in the same manner as in Example 1.

### (Comparative Example 2)

A resin composition was obtained by using PVB 8 being unmodified polyvinyl butyral, as the polyvinyl acetal-based resin used, and mixing 25 parts by mass of a plasticizer (3GO) with 100 parts by mass of PVB 8, and the resin composition obtained was used and subjected to press forming by the same method as in Example 1, thereby obtaining a pressure-sensitive adhesive film. The pressure-sensitive adhesive film obtained was evaluated in the same manner as in Example 1.

### (Comparative Example 3)

PVB 7 being unmodified polyvinyl butyral was used as the polyvinyl acetal-based resin used. A resin composition was obtained by mixing 10 parts by mass of a plasticizer (3GO) with 100 parts by mass of PVB 7, and the resin composition obtained was used and subjected to press forming by the same method as in Example 1, thereby obtaining a pressure-sensitive adhesive film. The pressure-sensitive adhesive film obtained was evaluated in the same manner as in Example 1.

### (Comparative Example 4)

PVB 7 being unmodified polyvinyl butyral was used as the polyvinyl acetal-based resin used. A resin composition was obtained by mixing 30 parts by mass of a plasticizer (3GO), 10 parts by mass of a reactive diluent (trimethylolpropane triacrylate: TMPA), and 0.1 parts by mass of benzophenone (BP) as a photopolymerization initiator, with 100 parts by mass of PVB 7, and the resin composition obtained was used and subjected to press forming by the same method as in Example 1, thereby obtaining a pressure-sensitive adhesive film. The amount of change in thickness and the rate of change in thickness of the test sample A in the compression creep test performed with respect to the pressure-sensitive adhesive film obtained were measured. In addition, foaming in an end portion of laminated glass, and transparency of the laminated glass were evaluated. The pressure-sensitive adhesive film was irradiated with 4000 mJ/cm² of light at a wavelength of 365 nm, by use of an ultra-high pressure mercury lamp, and the shear storage elastic modulus (G') and the maximum peak temperature of tanδ were measured after the light irradiation.

Furthermore, the pressure-sensitive adhesive film produced in Comparative Example 4 was used to produce a laminate as noted with respect to each of the evaluation methods and the laminate was irradiated with 4000 mJ/cm² of light at a wavelength of 365 nm, by use of an ultra-high pressure mercury lamp, in evaluation of the adhesive force to a polycarbonate base material, the adhesive force to a TAC polarization plate and the adhesive force to ITO-PET. Thereafter, the adhesive force to a polycarbonate base material, the adhesive force to a TAC polarization plate and the adhesive force to ITO-PET were evaluated.

### (Comparative Example 5)

PVB 8 being unmodified polyvinyl butyral was used as polyvinyl butyral used as a raw material, instead of PVB 1. A resin composition was obtained by mixing 10 parts by mass of a plasticizer (3GO), 20 parts by mass of a reactive diluent (TMPA), and 0.2 parts by mass of benzophenone as a photopolymerization initiator, with 100 parts by mass of PVB 8, and the resin composition obtained was used and subjected to press forming by the same method as in Example 1, thereby obtaining a pressure-sensitive adhesive film. The amount of change in thickness and the rate of change in thickness of the test sample A in the compression creep test performed with respect to the pressure-sensitive adhesive film obtained were measured. In addition, foaming in an end portion of laminated glass, and transparency of the laminated glass were evaluated. The pressure-sensitive adhesive film was irradiated with 4000 mJ/cm² of light at a wavelength of 365 nm, by use of an ultra-high pressure mercury lamp, and the shear storage elastic modulus (G') and the maximum peak temperature of tanδ were measured after the light irradiation.

Furthermore, the pressure-sensitive adhesive film produced in Comparative Example 5 was used to produce a laminate as noted with respect to each of the evaluation methods and the laminate was irradiated with 4000 mJ/cm² of light at a wavelength of 365 nm, by use of an ultra-high pressure mercury lamp, in evaluation of the adhesive force to a polycarbonate base material, the adhesive force to a TAC polarization plate and the adhesive force to ITO-PET. Thereafter, the adhesive force to a polycarbonate base material, the adhesive force to a TAC polarization plate and the adhesive force to ITO-PET were evaluated.

### (Comparative Example 6)

A resin composition was obtained by diluting 100 parts by mass of a (meth)acrylic polymer (Ac1) obtained by polymerizing a monomer at a monomer ratio shown in Table 3, with ethyl acetate, so that the solid content was 45% by mass, and adding 1 part by mass of an isocyanate-based crosslinking agent ("Coronate L-45" manufactured by Nippon Polyurethane Industry Co., Ltd., solid content 45% by mass) on solid content basis. The resin composition obtained was applied to a release treatment surface of a release PET film so that the thickness after drying was 150 µm, and the resultant was dried at 80°C for 15 minutes, thereby obtaining a pressure-sensitive adhesive film. A laminate obtained by stacking five pressure-sensitive adhesive films thus obtained was subjected to press forming at a temperature 160°C and a pressure of 20 MPa, thereby obtaining a pressure-sensitive adhesive film having a thickness of 750 µm. The pressure-sensitive adhesive film obtained was aged at 23°C for 5 days, and then evaluated in the same manner as in Example 1.

### (Comparative Example 7)

The same manner as in Comparative Example 6 was performed except that the (meth)acrylic polymer (Ac1) was changed to a (meth)acrylic polymer (Ac2).

Table 1 below shows allyl ether monomers (1) to (4) used as raw materials in Examples.

**Table 1**

| Allyl ether monomer | | (1) | (2) | (3) | (4) |
|---|---|---|---|---|---|
| Molecular weight | | 2500 | 1500 | 2000 | 1500 |
| Structure | Type of A¹O | EO | - | EO | EO |
| | | PO | PO | PO | - |
| | PO/EO(mol) | 50/50 | 100/0 | 50/50 | 0/100 |
| | Terminal (R¹) | Butyl | Hydrogen atom | Hydrogen atom | Hydrogen atom |
| Average number of repeating units | EO | 23.4 | - | 19.0 | 32.8 |
| | PO | 23.4 | 24.9 | 19.0 | - |

Table 2 below shows PVB 1 to PVB 8 used in Examples and Comparative Examples.

**Table 2**

| | | | PVB1 | PVB2 | PVB3 | PVB4 | PVB5 | PVB6 | PVB7 | PVB8 | PVB9 |
|---|---|---|---|---|---|---|---|---|---|---|---|
| Polyvinyl acetal-based resin | Acetyl | Content rate (% by mol) | 1.8 | 0.9 | 2.1 | 1.8 | 1.2 | 3.1 | 1 | 1 | 1 |
| | Hydroxyl group | Content rate (% by mol) | 20.4 | 27.1 | 12.4 | 21.8 | 18.8 | 14.5 | 32 | 31 | 20 |
| | Acetal | Content rate (% by mol) | 74.8 | 70.1 | 64 | 73.7 | 74.7 | 80.5 | 67 | 68 | 77.9 |
| | | Type | Butyral | Butyral | Butyral | Butyral | Butyral | Butyral | Butyral | Butyral | Butyral |
| | Alkylene oxide structure | Content rate (% by mol) | 3.0 | 1.9 | 1.5 | 2.7 | 5.3 | 1.9 | - | - | 1.1 |
| | | Type | EO/PO | PO | EO/PO | EO/PO | EO/PO | EO | - | - | EO |
| | | Terminal (R¹) | Butyl | Hydrogen atom | Butyl | Butyl | Hydrogen atom | Hydrogen atom | - | - | Hydrogen atom |
| | | Average number of repeating units (EO) | 23 | - | 23 | 23 | 19 | 33 | - | - | 33 |
| | | Average number of repeating units (PO) | 23 | 25 | 23 | 23 | 19 | - | - | - | - |

Table 3 below shows (meth)acrylic polymers used in Comparative Examples.

**Table 3**

| | | | Ac1 | Ac2 |
|---|---|---|---|---|
| (Meth)acrylic polymer | Monomer (% by mass) | n-Butyl acrylate | 65 | 25 |
| | | Methyl methacrylate | 26 | - |
| | | Ethyl acrylate | 4 | - |
| | | Hydroxyethyl acrylate | 1 | - |
| | | 2-Ethylhexyl acrylate | - | 32 |
| | | Isobutyl acrylate | - | 27 |
| | | 4-Hydroxybutyl acrylate | - | 15 |
| | | Acrylic acid | 4 | 1 |

Table 4 shows conditions for carrying out each of Examples and Comparative Examples, physical properties and evaluation results.

**Table 4**

| | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|---|---|
| Resin | Type | PVB1 | PVB2 | PVB3 | PVB4 | PVB5 | PVB6 | PVB9 | PVB9 | PVB9 | PVB7 | PVB8 | PVB7 | PVB7 | PVB8 | Ac1 | Ac2 |
| | Molecular weight Mw(×10^4) | 23 | 17 | 35 | 30 | 22 | 26 | 16 | 16 | 16 | 36 | 19 | 36 | 36 | 19 | 65 | 70 |
| Plasticizer | 3GO (parts by mass*1) | - | - | - | - | - | 15 | - | - | - | 40 | 25 | 10 | 30 | 10 | - | - |
| | DGP700 | - | - | - | - | - | - | 14 | - | - | - | - | - | - | - | - | - |
| | PPG1000 | - | - | - | - | - | - | - | 14 | - | - | - | - | - | - | - | - |
| | TG1000R | - | - | - | - | - | - | - | - | 14 | - | - | - | - | - | - | - |
| Reactive diluent | TMPA (parts by mass*1) | - | - | - | - | - | - | - | - | - | - | - | - | 10 | 20 | - | - |
| Photopolymerization initiator | BP (parts by mass*2) | - | - | - | - | - | - | - | - | - | - | - | - | 1 | 1 | - | - |
| Crosslinking agent | Coronate L-45 (parts by mass*1) | - | - | - | - | - | - | - | - | - | - | - | - | - | - | 1 | 1 |
| Thickness | µm | 780 | 780 | 780 | 780 | 780 | 780 | 900 | 680 | 780 | 780 | 780 | 780 | 780 | 780 | 750 | 750 |
| Amount of change in compression creep | µm | 212 | 176 | 252 | 92 | 321 | 310 | 305 | 202 | 251 | 37 | 376 | 3 | 76 Before light irradiation | 410 Before light irradiation | 612 | 652 |
| Rate of change in compression creep | % | 27.2 | 22.6 | 32.3 | 11.8 | 41.2 | 39.7 | 39.1 | 25.9 | 32.2 | 4.7 | 48.2 | 0.4 | 9.7 Before light irradiation | 52.6 Before light irradiation | 816 | 86.9 |
| Local maximum peak temperature of tanδ | Temperature (°C) | 33.2 | 38.2 | 30.1 | 41.2 | 24.1 | 25.2 | 33.2 | 29.2 | 30.7 | 26 | 31 | 56 | 35 Before light irradiation | 40 Before light irradiation | 5 | -3 |
| G@85°C | (10⁶Pa) | 0.16 | 0.10 | 0.12 | 0.24 | 0.096 | 0.21 | 0.27 | 0.23 | 0.25 | 0.25 | 0.14 | 1.6 | 0.21 Before light irradiation | 0.12 Before light irradiation | 0.054 | 0.005 |
| Foaming in end portion of laminated glass | | 2 | 2 | 3 | 1 | 4 | 4 | 4 | 4 | 4 | 1 | 5 | 1 | 1 | 5 | 5 | 5 |
| Transparency of laminated glass | | 2 | 2 | 2 | 3 | 1 | 1 | 1 | 1 | 1 | 4 | 1 | 5 | 4 | 1 | 1 | 1 |
| Adhesive force to PC | Adhesive force (N) | 221 | 354 | 213 | 156 | 205 | 208 | 211 | 214 | 203 | 23 | 21 | 18 | 22 | 25 | 260 | 210 |
| | Evaluation | AA | AA | AA | A | AA | AA | AA | AA | AA | B | B | B | B | B | an | an |
| Adhesive force to TAC polarization plate | | AA | AA | AA | A | AA | AA | AA | AA | AA | B | B | B | B | B | an | an |
| Adhesive force to ITO-PET | | AA | an | AA | A | AA | an | an | an | AA | B | B | B | B | B | an | an |

| | | | | | | | | | | | | | | | | | |
|---|---|---|---|---|---|---|---|---|---|---|---|---|---|---|---|---|---|
| *1 represents "parts by mass" based on 100 parts by mass of thermoplastic resin *2 represents "parts by mass" based on 100 parts by mass of reactive diluent | | | | | | | | | | | | | | | | | |

The pressure-sensitive adhesive film of each of Examples above exhibited an amount of change in thickness before and after the compression creep test, falling within a predetermined range, and also exhibited a high adhesive force to a polycarbonate base material, and therefore was favorable in transparency in low-temperature sticking, caused small foaming in an end portion thereof and was also favorable in adhesiveness to a TAC polarization plate.

On the contrary, that of each of Comparative Examples 1 to 4, 6 and 7 exhibited an amount of change in thickness before and after the compression creep test, not falling within a predetermined range, and that of each of Comparative Examples 1 to 5 exhibited a low adhesive force to a polycarbonate base material, and therefore it was not possible that all of transparency in low-temperature sticking, the effect of suppressing the occurrence of foaming in an end portion, and adhesiveness to a TAC polarization plate were favorable.

### Reference Signs List

30A, 30B, 30C, 30D laminate
31 display element
32 surface protection panel
34, 34A, 34B adhesive film (pressure-sensitive adhesive film)
32 second layer
41, 42 laminated glass member
43 polarization element

## Claims

1. A pressure-sensitive adhesive film comprising a thermoplastic resin and having a thickness of 150 µm or more and 2000 µm or less,
an amount of change in thickness of a test sample A in the following compression creep test performed being 50 µm or more and 325 µm or less, and
an adhesive force to a polycarbonate base material, as measured by the following pressure-sensitive adhesive force measurement method, being 100 N or more:
<Compression creep test>
a test sample A having a size of a diameter of 8 mm, obtained by cutting out a pressure-sensitive adhesive film, is compressed under conditions of a load of 410 g and 30°C for 30 minutes and then a thickness (A) of the test sample A is measured; thereafter, a temperature is raised from 30°C to 90°C at a rate of temperature rise of 6°C/min at a load of 410 g maintained; after compression under conditions of a load of 410 g and 90°C for 5 minutes, a thickness (B) of the test sample A is measured; and an absolute value of a difference between the thickness (A) and the thickness (B) of the test sample A is defined as the amount of change in thickness of the test sample A;
<Adhesive force measurement method>
a pressure-sensitive adhesive film having a size of a length of 15 mm and a width of 15 mm and two sheets of polycarbonate plate glass each having a thickness of 2 mm, a length of 25 mm and a width of 100 mm, according to JIS K6735, are provided; the two sheets of polycarbonate plate glass are placed and stacked crisscross with the pressure-sensitive adhesive film being interposed therebetween so that longitudinal directions of the sheets are perpendicular to each other; thereafter, the two sheets of polycarbonate plate glass stacked with the pressure-sensitive adhesive film being interposed therebetween are subjected to temporary compression bonding under conditions of 90°C and 0.1 MPa for 3 minutes in a vacuum laminator by use of a spacer having the same thickness as that of the pressure-sensitive adhesive film so that a thickness of the pressure-sensitive adhesive film is constant; next, the two sheets of polycarbonate plate glass subjected to temporary compression bonding are further subjected to main compression bonding under conditions of 90°C and 0.5 MPa for one hour, thereby obtaining a laminated glass sample; and a maximum load (N) in release of one polycarbonate plate glass from other polycarbonate plate glass in the laminated glass sample obtained, in a direction perpendicular to an adhesive surface at a rate of 10 mm/min under an environment at a temperature of 23°C, is measured, and the maximum load (N) is defined as the adhesive force.

2. The pressure-sensitive adhesive film according to claim 1, wherein a maximum peak temperature of tanδ is 10°C or more and 52°C or less.

3. The pressure-sensitive adhesive film according to claim 1 or 2, wherein a shear storage elastic modulus at 85°C is 0.06 × 10⁶ Pa or more.

4. The pressure-sensitive adhesive film according to any one of claims 1 to 3, comprising no plasticizer, or comprising less than 20 parts by mass of a plasticizer based on 100 parts by mass of the thermoplastic resin.

5. The pressure-sensitive adhesive film according to any one of claims 1 to 4, wherein a thickness is 150 µm or more and 1500 µm or less.

6. The pressure-sensitive adhesive film according to any one of claims 1 to 5, wherein the thermoplastic resin is a polyvinyl acetal-based resin.

7. The pressure-sensitive adhesive film according to claim 6, wherein a weight-average molecular weight (Mw) of the polyvinyl acetal-based resin is 50,000 or more and 800,000 or less.

8. The pressure-sensitive adhesive film according to claim 6 or 7, wherein the polyvinyl acetal-based resin has a polyalkylene oxide structure represented by the following formula (1): 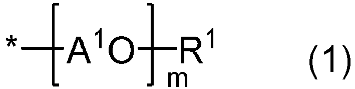 wherein A¹O represents an oxyalkylene group having 2 to 6 carbon atoms, and m represents an average number of repeating and is 4 to 200; R¹ represents an alkyl group having 1 to 8 carbon atoms, or a hydrogen atom, in which the oxyalkylene group is optionally adopted singly or as a mixture of two or more kinds thereof; and * represents a position of binding with other group.

9. The pressure-sensitive adhesive film according to claim 8, wherein R¹ in the formula (1) represents an alkyl group.

10. The pressure-sensitive adhesive film according to any one of claims 6 to 9, wherein a degree of acetalization is 60% by mol or more.

11. The pressure-sensitive adhesive film according to any one of claims 1 to 10, for use in the bonding of a first organic material substrate and a second organic material substrate or inorganic material substrate.

12. The pressure-sensitive adhesive film according to any one of claims 1 to 11, wherein the first organic material substrate and the second organic material substrate are at least one organic material substrate selected from the group consisting of a polarization film, a polyethylene terephthalate film, a polycarbonate plate, and a (meth)acrylic plate.

13. A laminate comprising the pressure-sensitive adhesive film according to any one of claims 1 to 12, a first organic material substrate, and at least one base material of second organic material substrate and inorganic material substrate.

14. A liquid crystal display comprising the laminate according to claim 13.

15. A laminated glass comprising the laminate according to claim 13.
